(19) Europäisches Patentamt
European Patent Office
Office européen des brevets

(11) **EP 3 424 856 B1**

(12) **EUROPEAN PATENT SPECIFICATION**

(45) Date of publication and mention
of the grant of the patent:
**25.01.2023  Bulletin 2023/04**

(21) Application number: **18180541.7**

(22) Date of filing: **28.06.2018**

(51) International Patent Classification (IPC):
***B66B 1/24*** *(2006.01)*

(52) Cooperative Patent Classification (CPC):
**B66B 1/2408;** B66B 2201/103; B66B 2201/211

(54) **ELEVATOR CONTROL APPARATUS AND ELEVATOR CONTROL METHOD**

AUFZUGSSTEUERUNGSVORRICHTUNG UND AUFZUGSSTEUERUNGSVERFAHREN

APPAREIL ET PROCÉDÉ DE COMMANDE D'ASCENSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.06.2017  JP 2017127297
21.06.2018  JP 2018117674**

(43) Date of publication of application:
**09.01.2019  Bulletin 2019/02**

(73) Proprietor: **CANON KABUSHIKI KAISHA
Ohta-ku
Tokyo 146-8501 (JP)**

(72) Inventor: **SHINOHE, Koji
Ohta-ku, Tokyo 146-8501 (JP)**

(74) Representative: **Canon Europe Limited
European Intellectual Property Group
4 Roundwood Avenue
Stockley Park
Uxbridge UB11 1AF (GB)**

(56) References cited:
**EP-A1- 3 075 695          WO-A1-2015/034459
JP-A- 2009 220 902      US-A1- 2015 096 843
US-A1- 2015 329 316**

**Description**

BACKGROUND OF THE INVENTION

Field of the Invention

The present invention relates to an elevator control apparatus and an elevator control method.

Description of the Related Art

Conventionally, the traffic amounts of elevators between floors are measured, recorded, and used to control the operations of the elevators or manage the elevators. The publication of Japanese Patent Application Laid-Open No. 2012-239085 discusses a technique for shortening the waiting time of a person waiting for an elevator (hereinafter referred to as a "waiting person") in an elevator boarding/exiting portion. This technique records how many elevator users move from which floor to which floor on a day-of-the-week basis and a time period basis, finds the regularities of the movements, and uses the found regularities to control the operations of elevators.

The technique discussed in the publication of Japanese Patent Application Laid-Open No. 2012-239085, however, does not control the operations of the elevators taking into account how many waiting people are actually present on which floor. Thus, if a different number of users from past patterns occur, appropriate control may not be able to be performed, and the total waiting time of waiting people may increase.

The present invention is directed to shortening the waiting times of waiting people waiting for elevators on all floors.

EP 3075695 describes an auto-calibration system for a passenger conveyance system that includes a depth-sensing sensor disposed within a passenger conveyance enclosure or disposed within a passenger waiting area external to the conveyance enclosure for capturing depth map data of objects within a field of view. A processing module is in communication with the depth-sensing sensor to receive the depth map data, the processing module using the depth map data to calibrate the sensor coordinate system to the world coordinate system.

WO 2015/034459 describes a conveyance system that includes a camera to generate an image of an area of interest. A dispatch system includes a facial recognition unit and a profile unit, the facial recognition unit detects facial features of a user in the image. The dispatch system determines if the facial features match a profile stored in the profile unit. The dispatch system scheduling car service in response to the facial features matches the profile stored in the profile unit. A system interface includes a system interface camera. The system interface camera generates a second image of the user at the system interface. The facial recognition unit detects facial features of the user in the second image. The dispatch system determines if the facial features of the user in the second image match the profile stored in the profile unit.

SUMMARY OF THE INVENTION

According to a first aspect of the present invention, there is provided an elevator control apparatus as specified in claims 1 to 9. According to a second aspect of the present invention, there is provided an elevator control system as specified in claim 10. According to a third aspect of the present invention, there is provided an elevator control method as specified in claim 11. According to a fourth aspect of the present invention, there is provided a program as specified in claim 12. According to a fifth aspect of the present invention, there is provided a storage medium as specified in claim 13.

Further features of the present invention will become apparent from the following description of exemplary embodiments with reference to the attached drawings.

BRIEF DESCRIPTION OF THE DRAWINGS

Fig. 1 is a configuration diagram illustrating an example of an elevator control system according to a first exemplary embodiment.
Fig. 2 is a diagram illustrating an example of a hardware configuration of an elevator control apparatus.
Fig. 3 is a flowchart illustrating a procedure of an elevator control process according to the first exemplary embodiment.
Fig. 4 is a diagram illustrating an operation according to the first exemplary embodiment.
Fig. 5 is a diagram illustrating an operation of a comparative example.
Fig. 6 is a configuration diagram illustrating an example of an elevator control system according to a second exemplary embodiment.

Fig. 7 is a flowchart illustrating a procedure of an elevator control process according to the second exemplary embodiment.

Fig. 8 is a flowchart illustrating a procedure of an elevator control process according to a third exemplary embodiment.

Fig. 9 is a flowchart illustrating a procedure of an operation schedule generation process of an elevating control device generates according to the first, second and third exemplary embodiments.

DESCRIPTION OF THE EMBODIMENTS

With reference to the attached drawings, embodiments for carrying out the present invention will be described in detail below.

The exemplary embodiments described below illustrate an example of a method for achieving the present invention and should be appropriately modified or changed depending on the configuration of an apparatus to which the present invention is applied and various conditions. Thus, the present invention is not limited to the following exemplary embodiments.

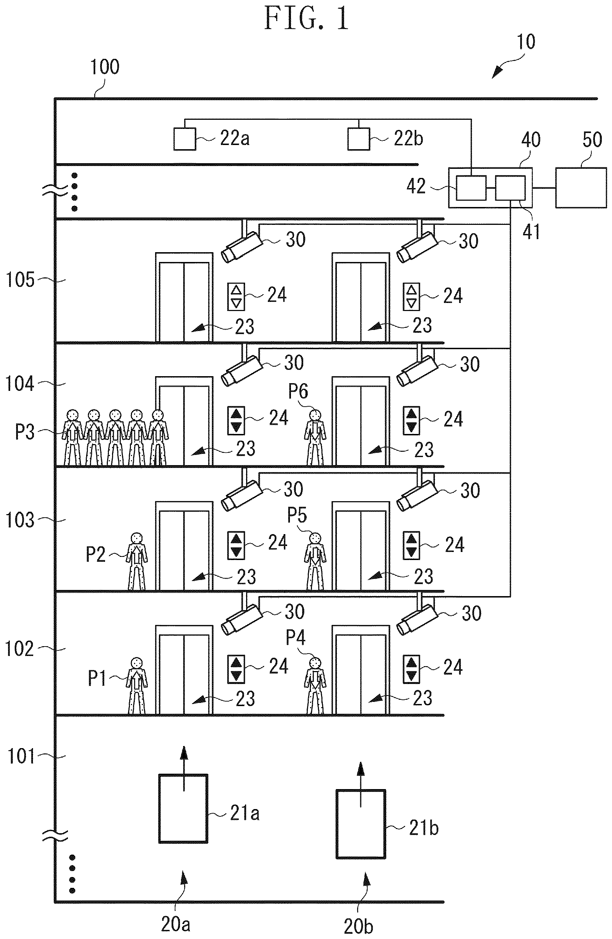

A first exemplary embodiment is described below. Fig. 1 is a configuration diagram illustrating an example of an elevator control system 10 according to the present exemplary embodiment. The elevator control system 10 includes a plurality of elevators 20a and 20b, a plurality of image capturing apparatuses 30, an elevator control apparatus 40, and a recording apparatus 50. Further, the elevator control apparatus 40 includes a network video recorder (NVR) 41 and an elevating control device 42. The elevators 20a and 20b and the image capturing apparatuses 30 are installed in a building 100. In the present exemplary embodiment, a case is described where the elevator control system 10 includes two elevators 20a and 20b. Alternatively, three or more elevators may be included.

The elevator 20a includes an elevator car 21a. The elevator car 21a has a box-like structure capable of moving up and down while carrying a person and is moved up and down by an elevating device 22a. The elevating device 22a includes a wire supporting the elevator car 21a, a pulley, and a motor. Similarly, the elevator 20b includes an elevator car 21b and an elevating device 22b. The driving of each of the elevating devices 22a and 22b is controlled by the elevator control apparatus 40, whereby the elevating devices 22a and 22b move up and down the elevator cars 21a and 21b, respectively.

Further, the elevators 20a and 20b include elevator boarding/exiting portions 23, which are provided on floors 101 to 105 of the building 100 and at which the elevator cars 21a and 21b can stop, and call buttons 24, which are installed near the elevator boarding/exiting portions 23. Each of the call buttons 24 is a button with which a waiting person waiting for the elevator car 21a or 21b in the elevator boarding/exiting portion 23 indicates the direction of the floor to which the waiting person wishes to go.

Information indicating a direction (up or down) corresponding to a pressed button in the call button 24 is transmitted to the elevating control device 42 through interior wiring (not illustrated). In the call buttons 24 illustrated in Fig. 1, a black button represents the state where the button indicating its direction is pressed, and a white button represents the state where the button is not pressed. In each of the elevator cars 21a and 21b, destination buttons (not illustrated) are provided with which a boarding person indicates the floor to which the boarding person wishes to go. Information of a floor corresponding to a pressed destination button is also transmitted to the elevating control device 42 through interior wiring.

The image capturing apparatuses 30 are cameras capable of capturing waiting people in the elevator boarding/exiting portions 23 on all the floors. Fig. 1 illustrates a case where waiting people P1 and P4 are waiting on the boarding/exiting floor 102, waiting people P2 and P5 are waiting on the boarding/exiting floor 103, and waiting people P3 and P6 are waiting on the boarding/exiting floor 104. In Fig. 1, white arrows illustrated on chest portions of the waiting people P1 to P6 indicate the directions of the floors to which the waiting people P1 to P6 wish to go.

In the present exemplary embodiment, a case is described where the image capturing apparatuses 30 are provided in the peripheries of the plurality of elevator boarding/exiting portions 23 and capture waiting people in the respective elevator boarding/exiting portions 23. The number of the image capturing apparatuses 30 to be installed is not limited to the number illustrated in Fig. 1. Alternatively, the configuration may be such that a single image capturing apparatus 30 is installed on each floor and captures a plurality of elevator boarding/exiting portions 23 on the same floor. Each of the image capturing apparatuses 30 is connected to the NVR 41, which is included in the elevator control apparatus 40, and transmits an image (a video) captured by the image capturing apparatus 30 to the NVR 41.

The elevator control apparatus 40 can be composed of a personal computer (PC), for example. The elevator control apparatus 40 is connected to the elevating devices 22a and 22b, the image capturing apparatuses 30, and the recording apparatus 50 via a local area network (LAN), for example. The forms of the physical connections between the apparatuses may be wired or wireless.

The NVR 41 can acquire an image (a video) captured by each of the image capturing apparatuses 30 and record the acquired image. Further, the NVR 41 has the function of analyzing the acquired image and recognizing a person in the image as a waiting person. More specifically, the NVR 41 has the function of analyzing a face image of the waiting person and recognizing the face of the waiting person, thereby identifying the waiting person as an individual. The elevating control device 42 acquires the analysis result of the image from the NVR 41, and based on the acquired analysis result of the image, generates an operation schedule for the elevators 20a and 20b. Further, according to the generated operation schedule, the elevating control device 42 controls the driving of the elevating devices 22a and 22b.

The recording apparatus 50 is an apparatus for recording the usage history of the elevators and registration information regarding used floors of a person (an elevator user) who has actually used the elevators.

The usage history includes at least one of the boarding floor, the exiting floor, and the date and time when the elevator user has used the elevators.

The registration information regarding used floors refers to information regarding the floor where the elevator user works, such as the floor where the elevator user has their own work desk, i.e., the floor on which their office room is. In a company that issues a security card to improve security, a person holds the security card over a sensor when entering a room, and thereby can enter the room. In this case, a database regarding information of people who work on this floor is collated with information of the security card read by the sensor. If the person is registered in advance, the entrance of the room is unlocked. A person who works for the company is registered in advance not only in the floor where the person has their office room, but also in another floor necessary for their work. For example, in a manufacturing industry, a person is also registered in advance in the floor where there is an experiment or manufacturing facility. Further, if not a manufacturing industry, but when a plurality of floors are occupied by the company where a person works, and if the person needs to enter and exit the floor where a related department has its office room, the person is registered in advance in this floor. Although there are also various other cases, such information is collectively defined as the registration information regarding used floors.

The recording apparatus 50 records the usage history of the elevators and the information regarding used floors such as the place of work of a person (an elevator user) who has actually used the elevators, in association with information indicating the feature of the elevator user. That is, the NVR 41 identifies each of a person having boarded the elevator car 21a or 21b on each floor and a person having exited the elevator car 21a or 21b on each floor. Then, the NVR 41 has the function of transmitting information indicating the feature of the identified person in association with the usage history and the information regarding used floors of the identified person to the recording apparatus 50.

In the present exemplary embodiment, the elevator control apparatus 40 analyzes each of images obtained by the image capturing apparatuses 30 capturing the elevator boarding/exiting portions 23 on all of the floors, and based on the result of face recognition performed on a waiting person, identifies the waiting person as an individual. Further, with reference to the usage history and the information regarding used floors recorded in the recording apparatus 50, the elevator control apparatus 40 predicts the direction of the floor for which the waiting person is heading. Further, the elevator control apparatus 40 predicts, for each floor, the number of waiting people who head for upper floors and the number of waiting people who head for lower floors.

Then, based on the result of the predictions, the elevator control apparatus 40 generates an operation schedule for the elevators so that the total waiting time of the waiting people is shorter than the total waiting time in a case this embodiment is not implemented. Then, the elevator control apparatus 40 controls the operations of the elevators. The total waiting time is the sum of the waiting times of all the waiting people on the floors. Specifically, the elevator control apparatus 40 generates an operation schedule so that among the plurality of elevator cars, a predetermined elevator car is preferentially sent to the floor where the largest number of waiting people are present. At this time, the elevator control apparatus 40 generates an operation schedule so that among the plurality of elevator cars, an elevator car capable of arriving earliest at the floor where the largest number of waiting people are present is preferentially sent to this floor.

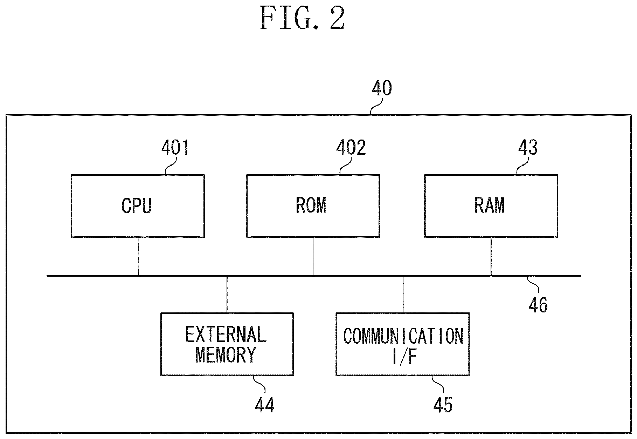

Fig. 2 is a diagram illustrating the hardware configuration of the elevator control apparatus 40.

The elevator control apparatus 40 includes a central processing unit (CPU) 401, a read-only memory (ROM) 402, a random-access memory (RAM) 43, an external memory 44, a communication interface (I/F) 45, and a system bus 46.

The CPU 401 performs overall control of the operation of the elevator control apparatus 40 and controls the components (42 to 45) via the system bus 46. The ROM 402 is a non-volatile memory for storing a program necessary for the CPU 401 to execute processing. Alternatively, the above program may be stored in the external memory 44 or an attachable and detachable storage medium (not illustrated). The RAM 43 functions as a main memory or a work area for the CPU 401. That is, when executing processing, the CPU 401 loads a necessary program from the ROM 402 into the RAM 43 and executes the loaded program, thereby achieving various functional operations.

The external memory 44 stores various types of data and various types of information that are necessary when the CPU 401 performs processing using a program. Further, the external memory 44 stores various types of data and various types of information obtained by the CPU 401 performing processing using a program. The communication I/F 45 is an interface for communicating with an external apparatus. The communication I/F 45 is a LAN interface, for example. The system bus 46 connects the CPU 401, the ROM 402, the RAM 43, the external memory 44, and the communication I/F 45 so that these components can communicate with each other.

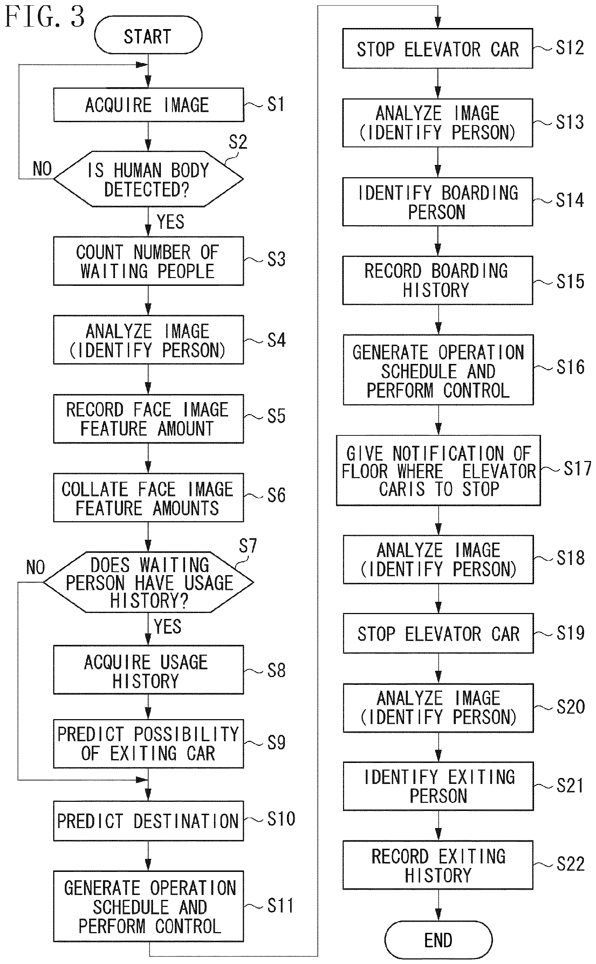

Next, with reference to Fig. 3, the operation of the elevator control apparatus 40 is described. Processing illustrated in Fig. 3 is started, for example, when the image capturing apparatuses 30 are turned on. The start timing of the processing in Fig. 3, however, is not limited to the above timing. The elevator control apparatus 40 can achieve the processing illustrated in Fig. 3 by the CPU 401 reading and executing a necessary program.

First, in step S1, the NVR 41 acquires each of images of the peripheries of the elevator boarding/exiting portions 23 on all of the floors captured by the image capturing apparatuses 30 and records the acquired image. Each of the image capturing apparatuses 30 continues to transmit an image captured by the image capturing apparatus 30 to the NVR 41 in a predetermined cycle. Thus, in the flow after step S1, the NVR 41 continues to record each of images of the peripheries of the elevator boarding/exiting portions 23 on all of the floors.

In step S2, the NVR 41 analyzes the image acquired in step S1 and detects a human body in the image. For example, the NVR 41 distinguishes between a human body and a background in the image, thereby detecting the human body in the image. The NVR 41 can distinguish between the human body and the background by the following method. For example, using the property that "a human being does not stand still in a video", the NVR 41 detects the contour of each object from images captured at regular time intervals and extracts a shift in the contour between the images. The human body detection method is not limited to the above method, and any method capable of detecting a human body from an image, such as a pattern process using a collation pattern dictionary stored in advance, is appropriately applicable.

Then, if a human body is not detected in the image by the human body detection process (No in step S2), the processing returns to step S1. In step S1, the NVR 41 continues to acquire an image. Then, if a human body is detected in the image (Yes in step S2), the processing proceeds to step S3. In step S3, the NVR 41 counts as the number of waiting people the number of human bodies detected by the human body detection process. Then, the NVR 41 records the number of waiting people in the recording apparatus 50 and also transmits the number of waiting people to the elevating control device 42.

In this case, a waiting person waiting outside the field of view of the image capturing apparatus 30 cannot be counted. In response, to predict the number of waiting people outside the field of view of the image capturing apparatus 30, the function of predicting the number of waiting people in the current elevator boarding/exiting portion 23 from the time to reach the maximum number of people that can be counted within the field of view may be provided.

In step S4, the NVR 41 analyzes the recorded image and identifies each of the waiting people as an individual. As a method for identifying the individual, for example, a method for performing face recognition by extracting a face image feature amount from a face area in an image and collating the extracted face image feature amount with information recorded in advance can be used. In this case, the face image feature amount is information indicating the feature of a person and includes a numerical value unique to each person's face and calculated from, for example, the distance between eyes or the size of the mouth in a face image. Further, as a method for extracting the face area from the image, any method such as a method using template matching or a method using luminance gradient information can be used. The method for identifying the individual is not limited to face recognition, and another image analysis process may be used.

In step S5, the NVR 41 records the face image feature amount extracted in step S4 in the recording apparatus 50, and the processing proceeds to step S6. In step S6, the NVR 41 collates the face image feature amount recorded in step S5 with a face image feature amount previously recorded in the recording apparatus 50, and the processing proceeds to step S7. In step S7, as a result of collating the face image feature amounts in step S6, the NVR 41 determines whether a waiting person having the same face image feature amount has been recorded in the past in the recording apparatus 50, i.e., whether the waiting person identified in step S4 has a history of using the elevators in the past (a usage history). Then, if the waiting person has a usage history of the elevators (Yes in step S7), the processing proceeds to step S8. If the waiting person does not have a usage history of the elevators (No in step S7), the processing proceeds to step S10.

In step S8, the NVR 41 acquires from the recording apparatus 50 the usage history of the waiting person determined by the collation and transmits the acquired usage history to the elevating control device 42, and the processing proceeds to step S9. In step S9, based on the usage history acquired in step S8, the elevating control device 42 predicts the possibility of the detected waiting person exiting a car. Specifically, from the usage history of the detected waiting person, the elevating control device 42 identifies the floor where the detected waiting person has previously exited a car with high frequency. Then, the elevating control device 42 predicts that there is a high possibility of the waiting person exiting a car on this floor.

For example, in an office building where various companies are mixed on each floor, the boarding floor and the exiting floor of a person who uses elevators are often almost fixed. An employee of each company boards one of the elevators on the first floor and exits the elevator on the floor where their office is located when coming to the office in the morning. The employee boards one of the elevators on the floor where their office is and exits the elevator on the first floor when leaving the office. That is, the employee boards and exits a car on the floor where their office is and the first floor with very high frequency. Thus, using the above property, it is possible to predict, from the usage history and the information regarding used floors of a person, the floor where there is a possibility of the person exiting a car.

In step S10, based on the possibility of the detected waiting person exiting a car, the elevating control device 42 predicts the direction of the destination floor of the waiting person and predicts the number of waiting people who head for upper floors (hereinafter referred to as "upward waiting people") (the number of upward waiting people) and the number of waiting people who head for lower floors(hereinafter referred to as "downward waiting people") (the number of downward waiting people). When predicting the destination, the elevating control device 42 compares a direction corresponding to a pressed button in the call button 24 with the direction of the floor where there is a possibility of exiting a car, which is predicted in step S9. Then, the directions coincide with each other, the elevating control device 42 determines that the prediction in step S9 is correct. Then, the elevating control device 42 predicts the direction of the floor where there is a possibility of exiting a car according to the prediction, as the direction of the floor to which the waiting person wishes to go. If, on the other hand, the directions are different from each other as a result of the comparison, the elevating control device 42 preferentially predicts the direction corresponding to the pressed button in the call button 24 as the direction of the floor to which the waiting person wishes to go.

For example, suppose that if a certain waiting person boards a car on the third floor, the waiting person has a history of exiting on the fourth floor above the third floor at the rate of 90% and a history of exiting on the second floor below the third floor at the rate of 10%. In this case, if the NVR 41 detects the waiting person on the third floor, the elevating control device 42 predicts that the floor where there is a possibility of the waiting person exiting a car is the fourth floor above the third floor. If, however, only the up button in the call button 24 is pressed on the third floor at this time, then by giving priority to information of the call button 24, the elevating control device 42 predicts that the waiting person is heading for the second floor below the third floor. Then, the elevating control device 42 counts the waiting person as a waiting person who wishes to go to a lower floor.

The destination of the waiting person who does not have a usage history in the past according to the determination in step S7 is predicted based on information of the call button 24. At this time, if both the up and down buttons in the call button 24 are pressed, the probability of the waiting person going up and the probability of the waiting person going down are each set to 50%. If the probability of going up and the probability of going down are 50%, both the number of upward waiting people and the number of downward waiting people may be counted, or neither the number of upward waiting people nor the number of downward waiting people may be counted. By the processing up to step S10, the elevating control device 42 predicts the directions of the destination floors of all the detected waiting people and predicts the number of upward waiting people and the number of downward waiting people.

In step S11, based on the result of the prediction of the destination of the waiting person in step S10, the elevating control device 42 generates an operation schedule for the elevators. The elevating control device 42 generates an operation schedule defining which of the elevator cars 21a and 21b is to be sent to which floor, such that the sum of the waiting times of the waiting people on all the floors is the shortest.

In the present exemplary embodiment, based on the numbers of waiting people on all the floors predicted in step S10, the elevating control device 42 predicts the floor (a floor with the largest number of people) where a group including the largest number of people, among groups of upward waiting people and groups of downward waiting people, is present. Then, the elevating control device 42 generates an operation schedule so that either one of the elevator cars 21a and 21b is preferentially sent to the floor with the largest number of people. At this time, the elevating control device 42 determines that either of the elevator cars 21a and 21b that is capable of arriving earliest at the floor with the largest number of people is to be preferentially sent to the floor with the largest number of people.

In step S11, to cause the waiting people on the floor with the largest number of people to board a car, the elevating control device 42 generates an operation schedule so that the elevator car 21a or 21b is sent to the floor with the largest number of people as an elevator car to move in the direction in which the waiting people belonging to the group with the largest number of people wish to go. Then, according to the generated operation schedule, the elevating control device 42 controls the driving of the elevating device 22a or 22b to move up or down the elevator car 21a or 21b.

In step S12, the elevating control device 42 stops the elevator car at the floor with the largest number of people. In step S13, the NVR 41 analyzes a captured image of the periphery of the elevator boarding/exiting portion 23 on the floor with the largest number of people after the elevator car stops at the floor with the largest number of people. Then, the NVR 41 identifies a waiting person remaining in the periphery of the elevator boarding/exiting portion 23. That is, in step S13, after the waiting people belonging to the group with the largest number of people on the floor with the largest number of people board the elevator car, the NVR 41 identifies a waiting person remaining in the periphery of the elevator boarding/exiting portion 23 on the floor with the largest number of people.

In step S14, the NVR 41 compares the analysis results of captured images of the elevator boarding/exiting portion 23 before and after the elevator car stops at the floor with the largest number of people. Then, the NVR 41 identifies a boarding person having actually boarded the elevator car. That is, the NVR 41 compares the waiting person identified in step S4 (the waiting person recorded in step S5) with the waiting person identified in step S13 and identifies as a boarding person a waiting person having disappeared from the periphery of the elevator boarding/exiting portion 23 after the elevator car stops. Then, in step S15, the NVR 41 records the boarding date and time and the boarding floor of the boarding person identified in step S13 in association with the face image feature amount of the boarding person as a usage history in the recording apparatus 50.

In step S16, the elevating control device 42 generates an operation schedule for the elevators so that the waiting people having boarded the elevator car on the floor with the largest number of people exit the car on the floors for which the waiting people are heading. That is, the elevating control device 42 generates an operation schedule so that the elevator car 21a or 21b is sent to a floor specified by a boarding person using a destination button in the elevator car. Then, according to the generated operation schedule, the elevating control device 42 controls the driving of the elevating device 22a or 22b to move up or down the elevator car 21a or 21b.

In step S17, the elevating control device 42 notifies the NVR 41 of the next floor where the elevator car having started moving up or down by the control in step S16 is to stop. In step S18, the NVR 41 analyzes a captured image of the periphery of the elevator boarding/exiting portion 23 on the floor where the elevator car is to stop and which is notified by the elevating control device 42 in step S17. Then, the NVR 41 identifies a waiting person waiting in the periphery of the elevator boarding/exiting portion 23 on the floor where the elevator car is to stop. That is, in step S18, before the elevator car arrives at the notified floor where the elevator car is to stop, and a boarding person exits the elevator car, the NVR 41 identifies a waiting person present in the periphery of the elevator boarding/exiting portion 23 on the floor where the elevator car is to stop.

In step S19, the elevating control device 42 stops the elevator car at the floor where the elevator car is to stop. In step S20, the NVR 41 analyzes a captured image of the periphery of the elevator boarding/exiting portion 23 on the floor where the elevator car is to stop (a stop floor) after the elevator car stops at the floor where the elevator car is to stop. Then, the NVR 41 identifies a person present in the periphery of the elevator boarding/exiting portion 23. That is, in step S20, after at least some of the waiting people belonging to the above group with the largest number of people exit the elevator car on the stop floor, the NVR 41 identifies a person present in the periphery of the elevator boarding/exiting portion 23 on the stop floor.

In step S21, the NVR 41 compares the analysis results of captured images of the elevator boarding/exiting portion 23 before and after the elevator car stops at the stop floor. Then, the NVR 41 identifies an exiting person having actually exited the elevator car. That is, the NVR 41 compares the person identified in step S18 with the person identified in step S20 and identifies as an exiting person a person having newly appeared in the periphery of the elevator boarding/exiting portion 23 on the stop floor. Then, in step S22, the NVR 41 records the exiting date and time and the exiting floor of the exiting person identified in step S21 in association with the face image feature amount of the exiting person as a usage history in the recording apparatus 50.

The remaining elevator car that is not to be sent to the floor with the largest number of people according to the determination in step S11 is assigned as an elevator car to move up and down the remaining waiting people other than the group including the largest number of people among the groups of upward waiting people and the groups of downward waiting people. Then, for the remaining elevator car, the elevating control device 42 generates an operation schedule for moving up and down the remaining waiting people. At this time, if there are a plurality of remaining elevator cars, the elevating control device 42 may generate an operation schedule so that one of the remaining elevator cars is preferentially sent to the floor where the group including the largest number of people among the remaining groups of waiting people is present.

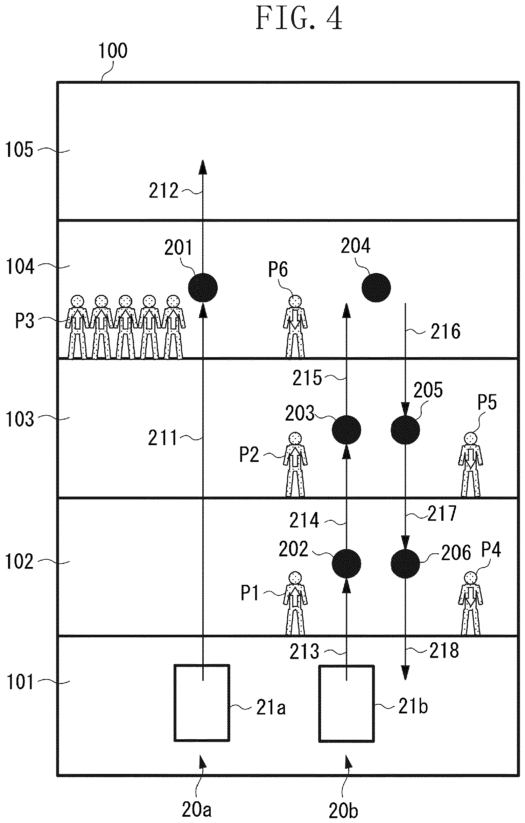

With reference to Fig. 4, an operation according to the present exemplary embodiment is described in detail below.

In Fig. 4, the floors 101 to 105 correspond to the first to fifth floors, respectively, of the building 100. The number of the waiting people P1 to P3, the directions for which the waiting people P1 to P3 are heading, and the states of the call buttons 24 are similar to those in Fig. 1. Further, the waiting people P1 to P6 have used the elevators of the building 100 in the past, and the face image feature amounts unique to the waiting people P1 to P6 are recorded in the recording apparatus 50.

In this case, the NVR 41 performs face recognition on the waiting people P1 to P6 by an image analysis process and transmits the results of the face recognition to the elevating control device 42. Based on the results of the face recognition performed on the waiting people P1 to P6, the elevating control device 42 acquires information regarding used floors such as the usage histories of the waiting people P1 to P6, which is recorded in the recording apparatus 50. Then, based on the acquired usage histories, the elevating control device 42 predicts the directions of the floors to which the waiting people P1 to P6 wish to go. Further, the elevating control device 42 predicts on each of the floors 101 to 105 the number of upward waiting people, which is the number of people who wish to go to upper floors, and the number of downward waiting people, which is the number of people who wish to go to lower floors.

For example, suppose that among the waiting people P3 and P6 in the fourth floor portion 104, the waiting people P3 have a history of using the fourth floor portion 104 and the fifth floor portion 105 many times. In response, the elevating control device 42 predicts that there is a high possibility that the waiting people P3, who are waiting in the fourth floor portion 104, board an upward elevator. That is, the elevating control device 42 predicts that five upward waiting people are present in the fourth floor portion 104.

If predicting the number of upward waiting people and the number of downward waiting people on each floor, then next, the elevating control device 42 generates an operation schedule for the elevators so that the total waiting time of the waiting people P1 to P6 is shorter than the total waiting time in a case this embodiment is not implemented. In Fig. 4, the operation schedule generated by the elevating control device 42 at this time is represented by filled circles 201 to 206 and arrows 211 to 218. The filled circle 201 represents a stop floor of the elevator car 21a. The filled circles 202 to 206 represent stop floors of the elevator car 21b. Further, the arrows 211 and 212 represent the movement paths of the elevator car 21a. The arrows 213 to 218 represent the movement paths of the elevator car 21b.

In the example illustrated in Fig. 4, as the number of waiting people belonging to a group of which the destination direction is the same on the same floor, the number of waiting people belonging to a group including the waiting people P3 in the fourth floor portion 104 is the largest, namely five. If the waiting times of the people belonging to the group including the waiting people P3 increase, the total waiting time of the waiting people significantly increases. In response, by placing emphasis on the group including the waiting people P3, the elevating control device 42 generates an operation schedule so that either one of the elevator cars is sent to the group including the waiting people P3 with top priority.

At this time, if both the elevator cars 21a and 21b are waiting on the first floor, the elevating control device 42 determines that the elevator car 21a is to be preferentially sent as an upward moving car to the fourth floor where the waiting people P3 are waiting. Then, the elevating control device 42 generates an operation schedule so that the elevator car 21a is moved up from the first floor to the fourth floor (the path 211), stopped at the fourth floor (the stop 201), and moved up to an upper floor while carrying the waiting people P3 (the path 212).

Further, the elevating control device 42 assigns the elevator car 21b to move up and down the remaining waiting people other than the waiting people P3, and generates an operation schedule for the elevator car 21b. In this case, first, by paying attention to upward waiting people among the remaining waiting people, the elevating control device 42 generates an operation schedule so that the elevator car 21b is sent to the lowest floor where upward waiting people are present, and the elevator car 21b is moved up from the lowest floor while picking up upward waiting people. Next, the elevating control device 42 generates an operation schedule so that the elevator car 21b is moved to the highest floor where downward waiting people are present, and the elevator car 21b is moved down from the highest floor while picking up downward waiting people. That is, the elevating control device 42 generates an operation schedule so that the elevator car 21b operates in the order of the path 213 → the stop 202 → the path 214 → the stop 203 → the path 215 → the stop 204 → the path 216 → the stop 205 → the path 217 → the stop 206 → the path 218.

Consequently, it is possible to control the elevators 20a and 20b so that the sum of the waiting times of the waiting people P1 to P6 is shorter than the sum of waiting times in a case this embodiment is not implemented.

For example, if the travel time of the elevator car 21a between floors is tm (seconds), and the stop time of the elevator car 21a at each floor is ts (seconds), and if the position of the elevator car 21a at the operation start time is the first floor, a total waiting time $T_{P3}$ until the waiting people P3 board the elevator car 21a is represented by the following formula.

$$T_{P3} = 3 \times tm \ (seconds) \times 5 \ (people) \ \ldots\ldots\ldots(1)$$

That is, a total waiting time Ta for the waiting people to board the elevator car 21a is represented by the following formula.

$$Ta = T_{P3} = 15 \times tm \ \ldots\ldots\ldots(2)$$

Further, if the travel time of the elevator car 21b between floors and the stop time of the elevator car 21b at each floor are the same as those of the elevator car 21a, and if the position of the elevator car 21a at the operation start time is the first floor, a total waiting time $T_{P1}$ until the waiting person P1 boards the elevator car 21b is represented by the following formula.

$$T_{P1} = 1 \times tm \ (seconds) \times 1 \ (person) \ \ldots\ldots\ldots(3)$$

Similarly, a total waiting time $T_{P2}$ of the waiting person P2, a total waiting time $T_{P6}$ of the waiting person P6, a total waiting time $T_{P5}$ of the waiting person P5, and a total waiting time $T_{P4}$ of the waiting person P4 are represented by the following formulas.

$$T_{P2} = (2 \times tm \ (seconds) + 1 \times ts \ (seconds)) \times 1 \ (person) \ \dots\dots\dots (4)$$

$$T_{P6} = (3 \times tm \ (seconds) + 2 \times ts \ (seconds)) \times 1 \ (person) \ \dots\dots\dots (5)$$

$$T_{P5} = (4 \times tm \ (seconds) + 3 \times ts \ (seconds)) \times 1 \ (person) \ \dots\dots\dots (6)$$

$$T_{P4} = (5 \times tm \ (seconds) + 4 \times ts \ (seconds)) \times 1 \ (person) \ \dots\dots\dots (7)$$

Thus, a total waiting time Tb for the waiting people to board the elevator car 21b is represented by the following formula.

$$Tb = T_{P1} + T_{P2} + T_{P6} + T_{P5} + T_{P4} = 15 \times tm + 10 \times ts \ \dots\dots\dots (8)$$

That is, a total waiting time T of the waiting people P1 to P6 illustrated in Fig. 4 is represented by the following formula.

$$T = Ta + Tb = 30 \times tm + 10 \times ts \ \dots\dots\dots (9)$$

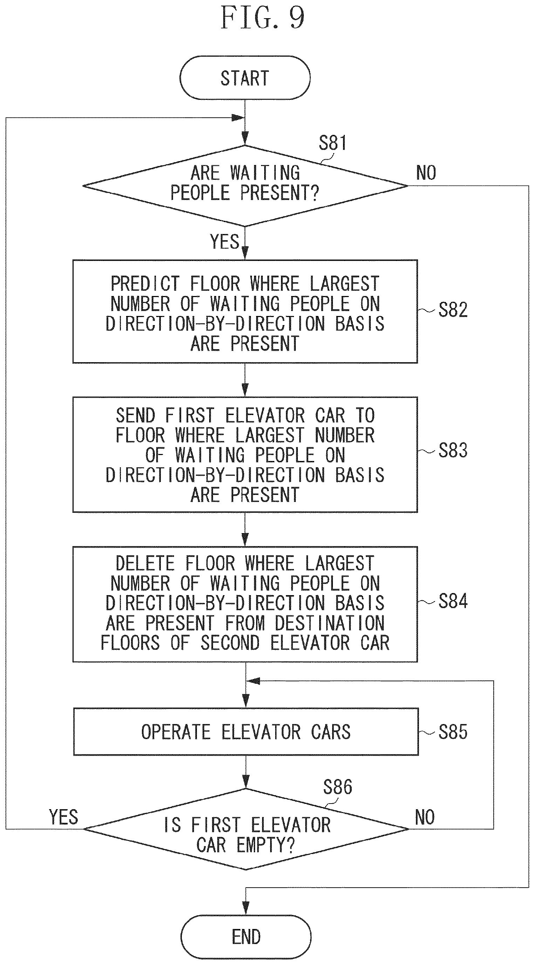

If the travel time tm between floors is 10 seconds, and the stop time ts at each floor is 30 seconds, the calculated total waiting time T of the waiting people P1 to P6 is 600 seconds. As described above, the elevating control device 42 generates an operation schedule so that the first elevator car 21a is sent first to the floor where the largest number of waiting people on a direction-by-direction basis are present. In the example of Fig. 4, on the fourth floor portion 104, five upward waiting people are present, and the largest number of waiting people on a direction-by-direction basis are present. The elevating control device 42 generates an operation schedule regarding the order of floors to which the second elevator car 21b is sent, except for the floor to which the first elevator 21a is sent. Further, to pick up waiting people heading in the opposite direction (downward in the example of Fig. 4) on the floor where the largest number of waiting people on a direction-by-direction basis are present, the second elevator car 21b also stops on the floor where the largest number of waiting people on a direction-by-direction basis are present. If the first elevator car 21a becomes empty, the elevating control device 42 predicts the number of waiting people again based on face recognition information and generates an operation schedule so that the first elevator 21a is sent again to the floor where the largest number of waiting people on a direction-by-direction basis are present. The elevating control device 42 generates an operation schedule regarding the order of floors to which the second elevator car 21b is sent, except for the floor to which the first elevator 21a is sent. In a case where there is a third elevator car, the elevating control device 42 generates an operation schedule so that, similarly to the first elevator car 21a, the third elevator car is sent to the floor where the largest number of waiting people on a direction-by-direction basis are present. If the timing of the generation of the operation schedule of the third elevator car coincides with that of the first elevator car 21a, the elevating control device 42 generates an operation schedule so that the third elevator car is sent to the floor where the second largest number of waiting people on a direction-by-direction basis are present. The same applies to a case where there are more elevator cars. Fig. 9 is a flowchart illustrating the procedure in which the elevating control device 42 generates operation schedules. The operation schedules are created when the lift is empty. In a case where the lift is occupied, the lift is operated in accordance with the instructions of the lift occupants. In step S81, if waiting people are present on each floor (Yes in step S81), the processing proceeds to step S82. If no waiting people are present (No in step S81), the processing is ended. In step S82, the floor where the largest number of waiting people on a direction-by-direction basis are present is predicted. In step S83, the first elevator car 21a is sent to the floor where the largest number of waiting people on a direction-by-direction basis are present. In step S84, the floor where the largest number of waiting people on a direction-by-direction basis are present is eliminated from the destination floors of a second elevator car , in a case where the second elevator car is also unoccupied. In step S85, the elevator cars are operated. In step S86, it is determined whether the first elevator car is empty. If the first elevator car is not empty (No in step S86), the processing returns to step S85. In step S85, the elevator cars continue to be operated. If the first elevator car is empty (Yes in step S86), the processing returns to step S81. In step S81, it is confirmed whether waiting people are present. The operation schedules may be updated as needed. For example, suppose that on the floor where the largest number of waiting people on a direction-by-direction basis are present, these waiting people are picked up, and then, all these waiting people exit from the elevator. At this time, according to the situation of waiting people on each floor, the operation schedules may be updated. Further, on the floor where the largest number of waiting people on a direction-by-direction basis are present, if the number of the largest number of waiting people exceeds a predetermined proportion (e.g., 30 percent) to all the waiting people, the processing illustrated in Fig. 9 may be executed.

As an alternative, the advantage of reducing waiting time could be achieved for a plurality of elevator cars for which only a subset are sent to the floor where the number of people predicted by the prediction means is largest. Thus, it is possible for some of the elevator cars to perform in the conventional manner by completing a continuous loop (up and then down, stopping at floors at which a request has been made). Note that if there are no requests and no detected people, then the elevator cars would be stationary.

For example, a first elevator car 21a performs according to S82 of FIG. 9, and a second elevator car 21b performs according to a continuous loop rather than step S83 of FIG. 9. Thus, the second elevator car 21b is configured to perform a continuous loop. From the bottom floor, the second elevator car 21b goes up the floors until there are no further passengers or requests to go up originating from floors above where the second elevator car 21b is currently stationed. Then, the second elevator car 21b goes to the highest floor with a down request and continue down until there are no further passengers or requests to go down below where the second elevator car 21b is currently stationed. Then, the second elevator car 21b goes up again until there are not no further passengers or request to go up from floors above where the second elevator car 21b is currently stationed, etc.

An advantage of this arrangement is that the second elevator car 21b would ensure that all floors will eventually be served in a reasonable time, so that the elevator cars are not restricted to serving only the largest groups of people and no group of people has to wait an unreasonably long time.

In the case of there being three or more elevator cars, a third elevator car could be provided that performs either according to the previously described continuous loop or according to step S83. A third elevator car that performs step S83 would go to the largest detected group of people, and continue until empty.

For an arrangement having four elevator cars, a possible arrangement would be two elevator cars (21a, 21b) configured to perform steps S82 and S83 of FIG. 9, while two elevator cars each perform a continuous loop in the manner of a conventional elevator car. Each elevator car is assigned a role of serving either the largest group or a continuous loop, so that the logic is simple and consistent.

As a further advantage, this arrangement would ensure that there are no passengers left waiting for a very long time, which would occur in the situation of a very large number of people waiting on one of the floors.

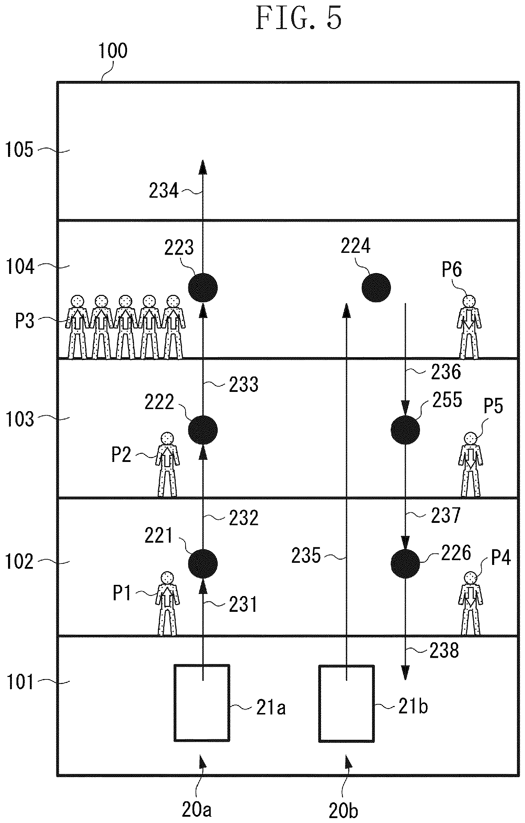

Fig. 5 is a diagram illustrating the paths of the elevator cars 21a and 21b in a case where as a comparative example, one of the elevator cars, namely the elevator car 21a, is simply assigned as an upward moving car, and the other elevator car, namely the elevator car 21b, is simply assigned as a downward moving car. In Fig. 5, the states of the waiting people P1 to P6 and call buttons are similar to those in the example illustrated in Fig. 4.

In this comparative example, the image capturing apparatuses 30 illustrated in Fig. 1 for capturing the peripheries of the elevator boarding/exiting portions 23 on all the floors are not installed, and an NVR does not perform an image analysis process (a face recognition process) or reference a usage history. In this comparative example, based on information of the call buttons, an elevating control device 42 determines only whether a waiting person who wishes to go up or down is present on each floor. Then, based on the determination result, the elevating control device 42 generates an operation schedule for the elevators.

In the example illustrated in Fig. 5, since the up and down buttons in the call buttons are pressed on each of the second to fourth floors, the elevating control device 42 can determine that at least one or more waiting people are present on each of the second to fourth floors. The elevating control device 42, however, cannot detect how many waiting people are present on which floor.

In this case, the elevating control device 42 generates an operation schedule so that the elevator car 21a, which is assigned as an upward moving car, picks up the upward waiting people P1, P2, and P3 in this order. That is, the elevating control device 42 generates an operation schedule so that the elevator car 21a operates in the order of a path 231 → a stop 221 → a path 232 → a stop 222 → a path 233 → a stop 223 → a path 234.

Meanwhile, the elevating control device 42 generates an operation schedule so that the elevator car 21b, which is assigned as a downward moving car, picks up the downward waiting people P6, P5, and P4 in this order. That is, the elevating control device 42 generates an operation schedule so that the elevator car 21b operates in the order of a path 235 → a stop 224 → a path 236 → a stop 225 → a path 237 → a stop 226 → a path 238.

At this time, if the travel time of each of the elevator cars 21a and 21b between floors is tm (seconds), and the stop time of each of the elevator cars 21a and 21b at each floor is ts (seconds), and if the position of the elevator car 21a at the operation start time is the first floor, a total waiting time $T_{P1}$ until the waiting person P1 boards the elevator car 21a is represented by the following formula.

$$T_{P1} = 1 \times tm \ (seconds) \times 1 \ (person) \ \dots\dots\dots (10)$$

Similarly, a total waiting time $T_{P2}$ of the waiting person P2 and a total waiting time $T_{P3}$ of the waiting people P3 are represented by the following formulas.

$$T_{P2} = (2 \times tm \ (seconds) + 1 \times ts \ (seconds)) \times 1 \ (person) \ \dots\dots\dots (11)$$

$$T_{P3} = (3 \times tm \ (seconds) + 2 \times ts \ (seconds)) \times 5 \ (people) \ \dots\dots\dots (12)$$

That is, a total waiting time Ta for the upward waiting people to board the elevator car 21a is represented by the following formula.

$$Ta = T_{P1} + T_{P2} + T_{P3} = 18 \times tm + 11 \times ts \ \dots\dots\dots (13)$$

Further, if the position of the elevator car 21b at the operation start time is the first floor, a total waiting time $T_{P6}$ until the waiting person P6 boards the elevator car 21b is represented by the following formula.

$$T_{P6} = 3 \times tm \ (seconds) \times 1 \ (person) \ \dots\dots\dots (14)$$

Similarly, a total waiting time $T_{P5}$ of the waiting person P5 and a total waiting time $T_{P4}$ of the waiting person P4 are represented by the following formulas.

$$T_{P5} = (4 \times tm \ (seconds) + 1 \times ts \ (seconds)) \times 1 \ (person) \ \dots\dots\dots (15)$$

$$T_{P4} = (5 \times tm \ (seconds) + 2 \times ts \ (seconds)) \times 1 \ (person) \ \dots\dots\dots (16)$$

Thus, a total waiting time Tb for the downward waiting people to board the elevator car 21b is represented by the following formula.

$$Tb = T_{P6} + T_{P5} + T_{P4} = 12 \times tm + 3 \times ts \ \dots\dots\dots (17)$$

That is, a total waiting time T of the waiting people P1 to P6 illustrated in Fig. 5 is represented by the following formula.

$$T = Ta + Tb = 30 \times tm + 14 \times ts \ \dots\dots\dots (18)$$

If the travel time tm between floors is 10 seconds, and the stop time ts at each floor is 30 seconds, the calculated total waiting time T of the waiting people P1 to P6 is 720 seconds.

If 600 seconds, which is the result of the above formula (9), and 720 seconds, which is the result of the above formula (18), are compared, the result of the above formula (9) is 120 seconds shorter. As can be understood from this result, a waiting person is identified as an individual by image analysis (face recognition), and the usage history of the individual is acquired to predict the destination of the waiting person, whereby it is possible to appropriately control elevator cars. Thus, it is possible to shorten the sum of the waiting times of waiting people on all floors.

It may also be possible that image capturing apparatuses 30 are installed in the elevator boarding/exiting portions 23 on each floor, and the number of waiting people on each floor is counted by image analysis (human body detection) and used to control the elevators. In this case, however, it is only possible to find the number of waiting people on each floor, but it is not possible to distinguish between waiting people who wish to go to upper floors and waiting people who wish to go to lower floors among the waiting people on each floor. Thus, in this case, it is only possible to perform control to simply preferentially send a predetermined elevator car to the floor where the number of waiting people is the largest.

For example, in Fig. 4, a case is considered where three upward waiting people P2 and four downward waiting people P5 are present in the third floor portion 103, and five upward waiting people P3 and one downward waiting person P6 are present as illustrated in Fig. 4 in the fourth floor portion 104. In this case, to shorten the total waiting time of the waiting people P1 to P6, an upward moving elevator car should be sent to the fourth floor portion 104, where the waiting people P3 as a group with the largest number of people are present. However, the total number of waiting people in the third floor portion 103 is seven, and the total number of waiting people in the fourth floor portion 104 is six. Thus, if only the number of waiting people is simply taken into account, an elevator car is sent to the third floor portion 103, where the number of waiting people is seven. This results in increasing the total waiting time of the waiting people P1 to P6.

In response, the elevator control apparatus 40 according to the present exemplary embodiment analyzes each of images obtained by capturing the elevator boarding/exiting portions 23 on all the floors and recognizes a person in the image as a waiting person. At this time, the elevator control apparatus 40 recognizes the face of the waiting person by the image analysis and identifies the waiting person as an individual. Then, based on the image analysis result, the elevator control apparatus 40 acquires information regarding used floors such as the usage history of the elevators of the waiting person. Then, based on the acquired information regarding used floors, the elevator control apparatus 40 generates an operation schedule for the elevators and controls the driving of the elevators.

Specifically, based on the acquired usage history, the elevator control apparatus 40 predicts the direction of the floor to which the waiting person wishes to go. Then, the elevator control apparatus 40 predicts on each floor the number of people in a group of waiting people who head for upper floors and the number of people in a group of waiting people who head for lower floors. Then, the elevator control apparatus 40 generates an operation schedule so that among the plurality of elevator cars, a predetermined elevator car is preferentially sent to the floor where the number of people in a group is the largest according to the predictions.

As described above, by performing image analysis (face recognition) and referencing a usage history, it is possible to detect, with respect to each floor, how many people are waiting for elevators, and which direction (i.e., upper or lower direction) and which floor each of the waiting people is highly likely to head for. That is, the elevator control apparatus 40 according to the present exemplary embodiment not only counts the number of waiting people on each floor, but also distinguishes between waiting people who head for upper floors and waiting people who head for lower floors and counts the number of waiting people who head for upper floors and the number of waiting people who head for lower floors. Thus, it is possible to appropriately control elevator cars to shorten the sum of the waiting times of waiting people waiting for elevators on all floors.

For example, as illustrated in Fig. 4, if five waiting people P3 are present in the fourth floor portion 104, it is possible to control the elevators so that an elevator car preferentially picks up the five waiting people P3. Further, as described above, even if three upward waiting people P2 and four downward waiting people P5 are present in the third floor portion 103 at this time, it is possible to appropriately distinguish the group including the waiting people P3 as the group with the largest number of people and perform control to preferentially send an elevator car to this group. As a result, it is possible to appropriately shorten the total waiting time of waiting people.

Further, at this time, if the elevator car to be preferentially sent to the floor where the waiting people P3 are waiting is, among the plurality of elevator cars, an elevator car capable of arriving earliest at the floor where the waiting people P3 are waiting, it is possible to more appropriately shorten the total waiting time of waiting people.

Further, the elevator control apparatus 40 can identify each of a person having boarded an elevator car on each floor and a person having exited the elevator car on each floor. Then, the elevator control apparatus 40 can record the boarding floor and the exiting floor of the identified person as the usage history of the person in the recording apparatus 50. As described above, a person having actually used an elevator is identified and recorded in association with the floors from and to which the person has used the elevator, whereby it is possible to predict the destination of the person with high accuracy when the person uses the elevator next time.

In the present exemplary embodiment, a case has been described where the elevator control apparatus 40 identifies each of a boarding person and an exiting person by image analysis and records the usage history of the identified person in the recording apparatus 50. Alternatively, the configuration may be such that, for example, the administrator of the elevator control apparatus 40 can record the usage history of an elevator user in the recording apparatus 50.

In the present exemplary embodiment, based on the results of predicting the numbers of waiting people who head in up and down directions on all the floors, the elevator control apparatus 40 generates an operation schedule for the elevators so that the total waiting time is shorter than the total waiting time in a case this embodiment is not implemented. Then, the elevator control apparatus 40 controls the operations of the elevators. The elevator control apparatus 40 generates an operation schedule so that among the plurality of elevator cars, a predetermined elevator car is preferentially sent to the floor where the largest number of waiting people are present. The elevator control apparatus 40 generates an operation schedule so that an elevator car capable of arriving earliest at the floor where the largest number of waiting people are present is preferentially sent to this floor.

The elevator control apparatus 40, however, may not necessarily send a predetermined elevator car to the floor where the largest number of waiting people are present. For example, if the highest floor of a high-rise building is an observation floor, and a direct elevator is separately provided for the observation floor, and the floor where the largest number of waiting people are present is the observation floor, an elevator car may not necessarily need to be sent to the observation floor, for which the direct elevator is provided. In such a case, the elevator control apparatus 40 generates an operation schedule by excluding the observation floor and therefore generates an operation schedule so that a predetermined elevator car is preferentially sent not to the floor with the largest number of people but to, for example, the floor where the second largest number of people are present.

Further, in a case where a building includes a floor where the restriction on entry into a room is particularly strict, or a rarely used floor, the numbers and the directions of waiting people regarding these floors may not necessarily be predicted.

These floors correspond to, for example, an executive floor or a vacant floor where there is no corporate office. For example, in a case where a separate executive elevator for which security check is performed is provided for executives, predictions are unnecessary regarding this floor. Further, in a case where people performing construction work use a separate cargo elevator, such as a case where a floor is currently empty but is under construction for a company that will occupy the floor next, predictions are unnecessary regarding this floor. As described above, floors regarding which predictions are made do not need to be all floors. Thus, in this case, an operation schedule is generated by making predictions regarding a plurality of floors except for floors regarding which predictions are unnecessary.

When identifying a boarding person and an exiting person, the elevator control apparatus 40 analyzes an image obtained by capturing the elevator boarding/exiting portion 23 on a stop floor of an elevator car. That is, if a person is present in the elevator boarding/exiting portion 23 before the elevator car stops at the stop floor, and the person disappears from the elevator boarding/exiting portion 23 after the elevator car stops, the elevator control apparatus 40 determines the person as a person having boarded the elevator car.

Further, if a person is not present in the elevator boarding/exiting portion 23 before the elevator car stops at the stop floor, and the person appears in the elevator boarding/exiting portion 23 after the elevator car stops, the elevator control apparatus 40 determines the person as a person having exited the elevator car. As described above, it is possible to appropriately identify a boarding person and an exiting person and appropriately record a usage history.

Next, a second exemplary embodiment of the present invention is described.

In the first exemplary embodiment, a case has been described where based on each of images captured by the image capturing apparatuses 30 installed in the elevator boarding/exiting portions 23, a person having boarded an elevator and a person having exited the elevator are identified. In the second exemplary embodiment, a case is described where an image capturing apparatus is installed also in each elevator car, and also using an image captured by the image capturing apparatus installed in the elevator car, a person having boarded an elevator and a person having exited the elevator are identified.

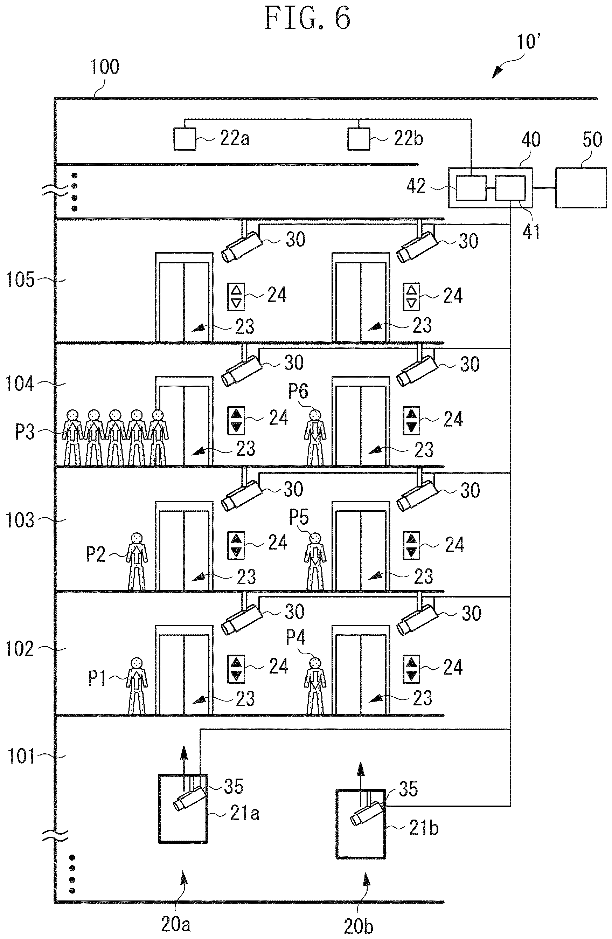

Fig. 6 is a configuration diagram illustrating an example of an elevator control system 10' according to the present exemplary embodiment. In Fig. 6, portions having configurations similar to those in the first exemplary embodiment are designated by the same signs as those in Fig. 1, and portions having different configurations are mainly described below.

The elevator control system 10' further includes an image capturing apparatus 35, which is installed in each of the elevator cars 21a and 21b. The image capturing apparatus 35 is a camera capable of capturing a user in the elevator car. The image capturing apparatus 35 is connected to the NVR 41 and continues to transmit an image (a video) captured by the image capturing apparatus 35 to the NVR 41 in a predetermined cycle. Then, the NVR 41 continues to record an image of the inside of the elevator car captured by the image capturing apparatus 35. The form of the connection between the image capturing apparatus 35 and the NVR 41 may be wired or wireless.

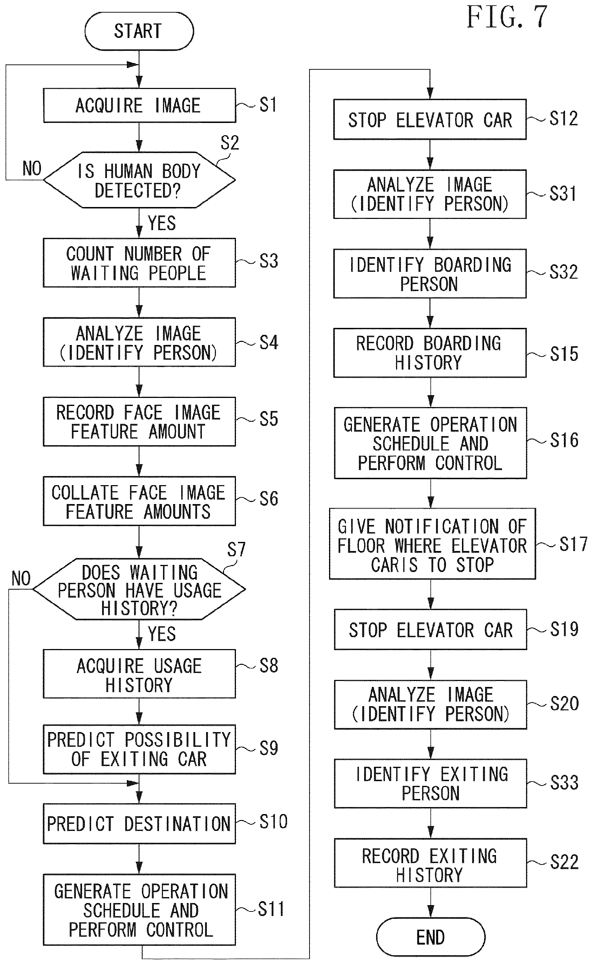

Fig. 7 is a flowchart illustrating the operation of the elevator control apparatus 40 according to the present

13

exemplary embodiment. Fig. 7 is similar to Fig. 3 except that step S18 in Fig. 3 is deleted, steps S13 and S14 are replaced with steps S31 and S32, respectively, and step S21 is replaced with step S33. Thus, portions in Fig. 7 in which processes similar to those in Fig. 3 are performed are designated by the same step numbers as those in Fig. 3, and portions in which different processes are performed are mainly described below.

In step S31, the NVR 41 analyzes a captured image of the inside of the elevator car and identifies a person in the elevator car. That is, in step S31, after the waiting people belonging to the above group with the largest number of people on floor where the largest number of people are present board the elevator car, the NVR 41 identifies a person in the elevator car.

In step S32, the NVR 41 identifies a person having actually boarded the elevator car on the floor with the largest number of people. At this time, the NVR 41 compares the waiting person identified in step S4 (the waiting person recorded in step S5) with the person identified in step S31 and identifies as a boarding person a person present in the periphery of the elevator boarding/exiting portion 23 and also present in the elevator car.

In step S33, the NVR 41 identifies a person having actually exited the elevator car on the stop floor. At this time, the NVR 41 compares the person identified in step S31 in the elevator car with the person identified in step S20 in the periphery of the elevator boarding/exiting portion 23 on the stop floor. Then, the NVR 41 identifies as an exiting person a person present in the elevator car and also present in the periphery of the elevator boarding/exiting portion 23.

As described above, if the image capturing apparatus 35 is installed in each elevator car, it is possible to identify a boarding person based on a captured image of the elevator boarding/exiting portion 23 before the elevator car stops at a boarding floor, and a captured image of the inside of the elevator car after the elevator car stops at the boarding floor. Further, it is possible to identify an exiting person based on a captured image of the inside of the elevator car before the elevator car stops at an exiting floor, and a captured image of the elevator boarding/exiting portion 23 after the elevator car stops at the exiting floor. At this time, as the captured image of the inside of the elevator car after the elevator car stops at the boarding floor and the captured image of the inside of the elevator car before the elevator car stops at the exiting floor, a common image can be used.

In contrast, if the image capturing apparatus 35 is not installed, and only an image obtained by capturing the elevator boarding/exiting portion 23 is used as in the first exemplary embodiment, captured images of the elevator boarding/exiting portion 23 before and after the elevator car stops at a boarding floor are used to identify a boarding person. Further, captured images of the elevator boarding/exiting portion 23 before and after the elevator car stops at an exiting floor are used to identify an exiting person.

That is, the image capturing apparatus 35 is installed in each elevator car, whereby it is possible to identify a boarding person and an exiting person by performing image analysis fewer times than in the first exemplary embodiment.

In the present exemplary embodiment, captured images of the inside of the elevator car before and after the elevator car stops at a boarding floor may be analyzed to identify a boarding person. Further, captured images of the inside of the elevator car before and after the elevator car stops at an exiting floor may be analyzed to identify an exiting person. That is, at least one of an image obtained by capturing the elevator boarding/exiting portion 23 on a stop floor of the elevator car and an image obtained by capturing the inside of the elevator car is analyzed, whereby it is possible to identify a boarding person and an exiting person.

Next, a third exemplary embodiment of the present invention is described.

In the first exemplary embodiment, a case has been described where, when the destination of a waiting person who does not have a usage history of the elevators is predicted, the probability of the waiting person going up and the probability of the waiting person going down are each set to 50%. In the third exemplary embodiment, a case is described where the destination of a waiting person who does not have a usage history of the elevators is predicted according to attribute information of the waiting person.

The configuration of an elevator control system according to the present exemplary embodiment is similar to that of the elevator control system 10 according to the first exemplary embodiment illustrated in Fig. 1.

First, a description is given of a method for predicting the destination of a waiting person who does not have a usage history of the elevators in the past. In the present exemplary embodiment, the destination of a waiting person is predicted according to attribute information of people using the floors of the building. The attribute information is information of each person, such as the gender (male or female), the presence or absence of eyeglasses, the body type (the height, corpulent type, or skinny type), the age, and the use of a cane.

In an office building, various companies and stores coexist on each floor. Attribute information of people using the companies and the stores varies, but may exhibit biased attribute information. For example, there are many corpulent males wearing eyeglasses in the designing department of a manufacturing company, or there are many females in a nail salon, or there are many elderly people in a nursing home. In the present exemplary embodiment, the destination of a waiting person who does not have a usage history of the elevators is predicted using the properties of the above bias, thereby improving prediction accuracy.

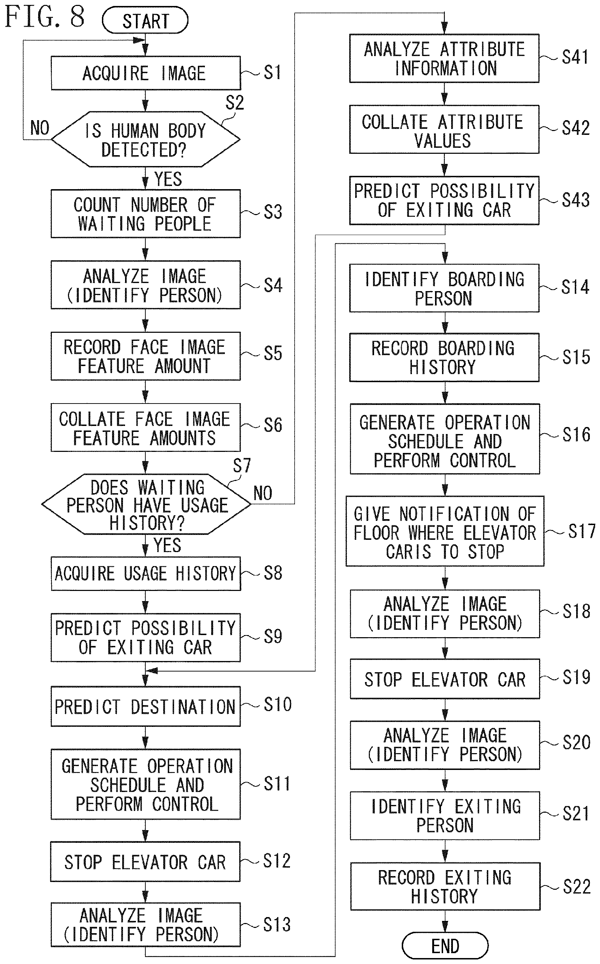

Fig. 8 is a flowchart illustrating the operation of the elevator control apparatus 40 according to the present exemplary embodiment. Fig. 8 is similar to Fig. 3 except that steps S41 to S43 are added. Thus, portions in Fig. 8 in which processes similar to those in Fig. 3 are performed are designated by the same step numbers as those in Fig. 3, and portions in which different processes are performed are mainly described below.

In step S41, the NVR 41 analyzes attribute information of the waiting person who does not have a usage history of the elevators in the past according to the determination in step S7. Then, the NVR 41 records an attribute value, which is a value indicating the attribute information, in the recording apparatus 50. As a method for analyzing the attribute information, for example, a method for analyzing attribute information of a detected person using a learning face image as a database can be employed.

Next, in step S42, the NVR 41 collates the attribute value recorded in step S41 with an attribute value previously recorded in the recording apparatus 50. Then, the NVR 41 reads from the recording apparatus 50 the usage history of a waiting person having the same attribute value as the attribute value obtained in step S41. For example, if, as a result of analyzing the attribute information in step S41, it is determined that the waiting person wears eyeglasses, the NVR 41 reads from the recording apparatus 50 the usage history of a waiting person wearing eyeglasses.

If the usage history of a waiting person having the attribute value that coincides with the attribute value obtained in step S41 is not recorded in the recording apparatus 50, the NVR 41 reads from the recording apparatus 50 the usage history of a waiting person having approximately the same attribute value as the attribute value obtained in step S41. "Approximately the same attribute value" means that, for example, the degree of similarity between the attribute values is equal to or greater than a predetermined value.

In step S43, based on the usage history acquired in step S42, the NVR 41 determines which floor the waiting person having the same attribute value as the attribute value obtained in step S41 uses with high frequency, thereby predicting the possibility of the waiting person exiting a car. For example, if a person wearing eyeglasses uses the third floor of the building with high frequency, the NVR 41 predicts that there is a high possibility of the waiting person going to the third floor.

In steps S15 and S22, when recording the boarding history and the exiting history in the recording apparatus 50, the NVR 41 also records information of the attribute value obtained in step S41 in association with the boarding history and the exiting history.

As described above, the elevator control apparatus 40 according to the present exemplary embodiment acquires attribute information of a waiting person. If the waiting person uses the elevators for the first time, the elevator control apparatus 40 predicts the destination of the waiting person, using the usage history of a person having the same or approximately the same attribute information as the acquired attribute information. Thus, it is also possible to predict with high accuracy the destination of a waiting person who uses elevators for the first time. As a result, it is possible to more appropriately shorten the total waiting time of waiting people waiting for the elevators.

In the present exemplary embodiment, a case has been described where, if the usage history of a waiting person as an individual cannot be acquired among waiting people identified as individuals by a face recognition process, for example, because the waiting person uses elevators for the first time, the usage history of a person having the same or approximately the same attribute information is acquired. However, regardless of the presence or absence of the usage history of the waiting person as an individual, the usage history of the waiting person may be acquired using analyzed attribute information. In this case, the face recognition process for identifying an individual is unnecessary.

Further, the present exemplary embodiment is also applicable to the elevator control system 10', in which the image capturing apparatus 35 is installed in each elevator car, as in the second exemplary embodiment.

According to the present invention, it is possible to shorten the sum of the waiting times of waiting people waiting for elevators on all floors.

The present invention can also be achieved by the process of supplying a program for achieving one or more functions of the above exemplary embodiments to a system or an apparatus via a network or a storage medium, and of causing one or more processors of a computer of the system or the apparatus to read and execute the program. Further, the present invention can also be achieved by a circuit (e.g., an application-specific integrated circuit (ASIC) for achieving the one or more functions.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments, but only by the scope of the appended claims.

**Claims**

1. An elevator control apparatus (40) comprising:

   analysis means (401) configured to analyze an image obtained by capturing an image of an area around an elevator door opening (23), and for recognizing a person (P1-P6) in the image;
   acquisition means (401) configured, based on a result of the analysis by the analysis means (401), to acquire information regarding a destination floor (101-105) of a building (100) that is associated with the recognized person (P1-P6);
   prediction means (401) configured, based on the information regarding the destination floor acquired by the acquisition means (401), to predict whether the destination floor corresponds to the destination of the recognized person (P1-P6) and to determine whether the destination is an upper floor or a lower floor; **characterized by** generation means (401) configured, based on the information regarding the destination floor acquired by the acquisition means (401) and the prediction of the prediction means (401), to generate an operation schedule of the elevator so that an elevator car (21a, 21b) is preferentially sent to a floor with a destination direction of an upper floor or a lower floor, which has the most people predicted to travel in the destination direction.

2. The elevator control apparatus (40) according to claim 1,

   wherein the analysis means (401) is configured to recognize a face of the person (P1-P6) to identify the person as an individual, and
   wherein the acquisition means (401) is configured to acquire the information regarding the destination floors of the person identified by the analysis means (401).

3. The elevator control apparatus (40) according to claim 1 or claim 2, wherein the analysis means (401) is configured to acquire attribute information of the person (P1-P6), and the acquisition means (401) is configured to acquire the information regarding destination floors of a person having same or approximately same attribute information as the attribute information acquired by the analysis means (401).

4. The elevator control apparatus (40) according to any preceding claim, wherein in a case where the information regarding the destination floors of the person (P1-P6) identified by the analysis means (401) cannot be acquired, the acquisition means (401) is configured to acquire the information regarding used floors of a person having same or approximately same attribute information as the attribute information acquired by the analysis means (401).

5. The elevator control apparatus (40) according to any preceding claim, wherein:

   the analysis means (401) is configured to analyze images of a plurality of persons waiting in an area around an elevator door on each of a plurality of floors of the building;
   the acquisition means (401) is configured, based on a result of the analysis by the analysis means (401), to acquire information regarding destination floors of the building that could correspond to destinations of the plurality of persons when using the elevator;
   the prediction means (401) is configured, based on the information regarding the destination floors acquired by the acquisition means (401), to predict whether the destination floors correspond to the destinations of the plurality of persons and to determine whether the destinations correspond to upper floors or lower floors; and
   the generation means (401) is configured, based on the information regarding the destination floors acquired by the acquisition means (401) and the predictions of the prediction means (401), to generate an operation schedule for the elevator.

**6.** The elevator control apparatus (40) according to claim 5, wherein:

the prediction means (401) is configured to identify a floor for which a largest number of persons have a destination that is an upper floor or a lower floor; and

the generation means (401) is configured to generate the operation schedule so that a predetermined elevator car is preferentially sent to the floor for which the largest number of persons have a destination that is an upper floor or a lower floor.

**7.** The elevator control apparatus (40) according to claim 6, wherein:

the prediction means (401) is configured to identify a floor for which a second largest number of persons have a destination that is an upper floor or a lower floor; and

the generation means (401) is configured to generate the operation schedule so that a predetermined further elevator car is preferentially sent to the floor for which the second largest number of persons have a destination that is an upper floor or a lower floor.

**8.** The elevator control apparatus (40) according to any preceding claim configured to control a plurality of elevator cars, wherein at least one of the plurality of elevator cars is separately further controlled to move sequentially up from lower floors to upper floors, stopping at floors on which an elevator car has been requested to go up and in accordance with the instructions of elevator car occupants, and then to move sequentially down from upper floors to lower floors, stopping at floors on which an elevator car has been requested to go down and in accordance with elevator car occupants.

**9.** The elevator control apparatus (40) according to any preceding claim wherein the generation means (401) is configured to generate the operation schedule only in a case in which the elevator car is empty, wherein the elevator control apparatus (40) is configured to control the elevator car in accordance with the instructions of one or more elevator car occupants in a case where the elevator car is not empty.

**10.** An elevator system comprising an elevator control apparatus (40) according to any preceding claim, and a plurality of driven elevator cars configured to move between a plurality of elevator door openings (23) on a plurality of floors of a building, wherein the elevator system is configured to drive the elevator cars in accordance with a schedule generated by the elevator control apparatus (40).

**11.** An elevator control method comprising:

an analysis step (S1-S6) of analyzing an image obtained by capturing an image of an area around an elevator door opening (23) and of recognizing a person (P1-P6) in the image;

an acquisition step (S7-S9) of, based on a result of the analysis in the analysis step, acquiring information regarding a destination floor (101-105) of a building (100) that is associated with the recognized person (P1-P6);

a prediction step (S10) of, based on the information regarding the destination floor acquired in the acquisition step, predicting whether the destination floor corresponds to a destination of the recognized person (P1-P6) and determining whether the destination is an upper floor or a lower floor; **characterized by**

a generation step (S11) of, based on the information regarding the destination floor acquired in the acquisition step and the prediction of the prediction step, generating an operation schedule of the elevator so that an elevator car is preferentially sent to a floor with a destination direction of an upper floor or a lower floor, which has the most people predicted to travel in the destination direction.

**12.** A program for an elevator system that, when executed on the elevator control apparatus (40) of claim 1, causes the elevator control system to perform a method according to claim 11.

**13.** A storage medium storing a program according to claim 12.

**Patentansprüche**

**1.** Aufzugsteuervorrichtung (40), umfassend:

eine Analyseeinrichtung (401), die konfiguriert ist, ein Bild zu analysieren, das durch Aufnehmen eines Bildes eines Bereichs um eine Aufzugstüröffnung (23) erhalten wird, und eine Person (P1-P6) im Bild zu erkennen;
eine Erfassungseinrichtung (401), die konfiguriert ist, basierend auf einem Ergebnis der Analyse der Analyseeinrichtung (401) Information bezüglich eines der erkannten Person (P1-P6) zugeordneten Zielstockwerks (101-105) des Gebäudes (100) zu erfassen;
eine Vorhersageeinrichtung (401), die konfiguriert ist, basierend auf der durch die Erfassungseinrichtung (401) erfassten Information bezüglich des Zielstockwerks, vorherzusagen, ob das Zielstockwerk dem Ziel der erkannten Person (P1-P6) entspricht, und zu bestimmen, ob das Ziel ein oberes Stockwerk oder ein unteres Stockwerk ist;

**gekennzeichnet durch**

eine Erzeugungseinrichtung (401), die konfiguriert ist, basierend auf der durch die Erfassungseinrichtung (401) erfassten Information bezüglich des Zielstockwerks und der Vorhersage der Vorhersageeinrichtung (401), einen Betriebsplan des Aufzugs zu erzeugen, sodass eine Aufzugskabine (21a, 21b) vorzugsweise an ein Stockwerk mit einer Zielrichtung eines oberen Stockwerks oder eines unteren Stockwerks gesendet wird, welches die meisten Personen aufweist, von denen vorhergesagt wird, dass sie in die Zielrichtung fahren.

2. Aufzugsteuervorrichtung (40) nach Anspruch 1,

wobei die Analyseeinrichtung (401) konfiguriert ist, ein Gesicht der Person (P1-P6) zu erkennen, um die Person als ein Individuum zu identifizieren, und
wobei die Erfassungseinrichtung (401) konfiguriert ist, die Information bezüglich des Zielstockwerks der durch die Analyseeinrichtung (401) identifizierten Person zu erfassen.

3. Aufzugsteuervorrichtung (40) nach Anspruch 1 oder Anspruch 2, wobei die Analyseeinrichtung (401) konfiguriert ist, Attributinformation der Person (P1-P6) zu erfassen, und die Erfassungseinrichtung (401) konfiguriert ist, die Information bezüglich Zielstockwerken einer Person mit gleicher oder annähernd gleicher Attributinformation wie die durch die Analyseeinrichtung (401) erfasste Attributinformation zu erfassen.

4. Aufzugsteuervorrichtung (40) nach einem der vorhergehenden Ansprüche, wobei in einem Fall, in dem die Information bezüglich der Zielstockwerke der durch die Analyseeinrichtung (401) identifizierten Person (P1-P6) nicht erfasst werden kann, die Erfassungseinrichtung (401) konfiguriert ist, die Information bezüglich genutzter Stockwerke einer Person mit gleicher oder annähernd gleicher Attributinformation wie die durch die Analyseeinrichtung (401) erfasste Attributinformation zu erfassen.

5. Aufzugsteuervorrichtung (40) nach einem der vorhergehenden Ansprüche, wobei:

die Analyseeinrichtung (401) konfiguriert ist, Bilder mehrerer Personen zu analysieren, die in einem Bereich um eine Aufzugstür auf einem jeweiligen von mehreren Stockwerken des Gebäudes warten;
die Erfassungseinrichtung (401) konfiguriert ist, basierend auf einem Ergebnis der Analyse der Analyseeinrichtung (401), Information bezüglich Zielstockwerken des Gebäudes zu erfassen, die Zielen der mehreren den Aufzug verwendenden Personen entsprechen könnten;
die Vorhersageeinrichtung (401) konfiguriert ist, basierend auf der durch die Erfassungseinrichtung (401) erfassten Information bezüglich der Zielstockwerke vorherzusagen, ob die Zielstockwerke den Zielen der mehreren Personen entsprechen, und zu bestimmen, ob die Ziele oberen Stockwerken oder unteren Stockwerken entsprechen; und
die Erzeugungseinrichtung (401) konfiguriert ist, basierend auf der durch die Erfassungseinrichtung (401) erfassten Information bezüglich der Zielstockwerke und der Vorhersagen der Vorhersageeinrichtung (401) einen Betriebsplan für den Aufzug zu erzeugen.

6. Aufzugsteuervorrichtung (40) nach Anspruch 5, wobei:

die Vorhersageeinrichtung (401) konfiguriert ist, ein Stockwerk zu identifizieren, für das die größte Anzahl von Personen als Ziel ein oberes Stockwerk oder ein unteres Stockwerk hat; und
die Erzeugungseinrichtung (401) konfiguriert ist, den Betriebsplan so zu erzeugen, dass eine vorbestimmte Aufzugskabine vorzugsweise an das Stockwerk gesendet wird, für das die größte Anzahl von Personen als Ziel ein oberes Stockwerk oder ein unteres Stockwerk hat.

7. Aufzugsteuervorrichtung (40) nach Anspruch 6, wobei:

die Vorhersageeinrichtung (401) konfiguriert ist, ein Stockwerk zu identifizieren, für das eine zweitgrößte Anzahl von Personen als Ziel ein oberes Stockwerk oder ein unteres Stockwerk hat; und

die Erzeugungseinrichtung (401) konfiguriert ist, den Betriebsplan so zu erzeugen, dass eine vorbestimmte weitere Aufzugskabine vorzugsweise an das Stockwerk gesendet wird, für das die zweitgrößte Anzahl von Personen als Ziel ein oberes Stockwerk oder ein unteres Stockwerk hat.

8. Aufzugsteuervorrichtung (40) nach einem der vorhergehenden Ansprüche, die konfiguriert ist, mehrere Aufzugskabinen zu steuern, wobei mindestens eine der mehreren Aufzugskabinen ferner separat gesteuert wird, um sich sequentiell von unteren Stockwerken hin zu oberen Stockwerken nach oben zu bewegen, um bei Stockwerken anzuhalten, auf denen eine Aufzugskabine gemäß den Anweisungen von Aufzugskabinenfahrgästen angefordert wurde, um nach oben zu fahren, und um sich dann sequentiell von oberen Stockwerken hin zu unteren Stockwerken nach unten zu bewegen, um bei Stockwerken anzuhalten, auf denen eine Aufzugskabine von Aufzugskabinenfahrgästen angefordert wurde, um nach unten zu fahren.

9. Aufzugsteuervorrichtung (40) nach einem der vorhergehenden Ansprüche, wobei die Erzeugungseinrichtung (401) konfiguriert ist, den Betriebsplan nur in einem Fall zu erzeugen, in dem die Aufzugskabine leer ist, wobei die Aufzugsteuervorrichtung (40) konfiguriert ist, die Aufzugskabine gemäß den Anweisungen eines oder mehrerer Aufzugskabinenfahrgäste in einem Fall zu steuern, in dem die Aufzugskabine nicht leer ist.

10. Aufzugsystem, umfassend eine Aufzugsteuervorrichtung (40) nach einem der vorhergehenden Ansprüche und mehrere angetriebene Aufzugskabinen, die konfiguriert sind, sich zwischen mehreren Aufzugstüröffnungen (23) auf mehreren Stockwerken eines Gebäudes zu bewegen, wobei das Aufzugsystem konfiguriert ist, die Aufzugskabinen gemäß einem von der Aufzugsteuervorrichtung (40) erzeugten Plan anzutreiben.

11. Aufzugsteuerverfahren, umfassend:

einen Analyseschritt (S1-S6) zum Analysieren eines Bildes, das durch Aufnehmen eines Bildes eines Bereichs um eine Aufzugstüröffnung (23) erhalten wird, und zum Erkennen einer Person (P1-P6) im Bild;
einen Erfassungsschritt (S7-S9) zum Erfassen von Information bezüglich eines der erkannten Person (P1-P6) zugeordneten Zielstockwerks (101-105) eines Gebäudes (100) basierend auf einem Ergebnis der Analyse im Analyseschritt;
einen Vorhersageschritt (S10), um basierend auf der im Erfassungsschritt erfassten Information bezüglich des Zielstockwerks vorherzusagen, ob das Zielstockwerk einem Ziel der erkannten Person (P1-P6) entspricht, und um zu bestimmen, ob das Ziel ein oberes Stockwerk oder ein unteres Stockwerk ist;
**gekennzeichnet durch**
einen Erzeugungsschritt (S11), um basierend auf der im Erfassungsschritt erfassten Information bezüglich des Zielstockwerks und der Vorhersage des Vorhersageschritts, einen Betriebsplan des Aufzugs zu erzeugen, sodass eine Aufzugskabine vorzugsweise an ein Stockwerk mit einer Zielrichtung eines oberen Stockwerks oder eines unteren Stockwerks gesendet wird, welches die meisten Personen aufweist, von denen vorhergesagt wird, dass sie in die Zielrichtung fahren.

12. Programm für ein Aufzugsystem, das, wenn es auf der Aufzugsteuervorrichtung (40) nach Anspruch 1 ausgeführt wird, das Aufzugsteuersystem veranlasst, ein Verfahren nach Anspruch 11 durchzuführen.

13. Speichermedium, das ein Programm nach Anspruch 12 speichert.

**Revendications**

1. Appareil de commande d'ascenseur (40), comprenant :

un moyen d'analyse (401) configuré pour analyser une image obtenue par une capture d'une image d'une zone environnant une ouverture (23) de porte d'ascenseur, et pour reconnaître une personne (P1-P6) dans l'image ;
un moyen d'acquisition (401) configuré, sur la base d'un résultat de l'analyse effectuée par le moyen d'analyse (401), pour acquérir des informations, concernant un étage de destination (101-105) d'un bâtiment (100), qui sont associées à la personne reconnue (P1-P6) ;
un moyen de prédiction (401) configuré, sur la base des informations concernant l'étage de destination acquises par le moyen d'acquisition (401), pour prédire si l'étage de destination correspond à une destination de la personne reconnue (P1-P6) et pour déterminer si la destination est un étage supérieur ou un étage inférieur ;
**caractérisé par**
un moyen de génération (401) configuré, sur la base des informations concernant l'étage de destination acquises par le moyen d'acquisition (401) et de la prédiction du moyen de prédiction (401), pour générer un programme d'exploitation de l'ascenseur de sorte qu'une cabine (21a, 21b) d'ascenseur soit envoyée de préférence vers un étage dans un sens de destination d'un étage supérieur ou d'un étage inférieur, qui est un étage ayant fait l'objet d'une prédiction de déplacement dans le sens de destination du nombre le plus important de personnes.

2.  Appareil de commande d'ascenseur (40) selon la revendication 1,

dans lequel le moyen d'analyse (401) est configuré pour reconnaître le visage d'une personne (P1-P6) de façon à identifier la personne en tant qu'individu, et
dans lequel le moyen d'acquisition (401) est configuré pour acquérir les informations concernant les étages de destination de la personne identifiée par le moyen d'analyse (401) .

3.  Appareil de commande d'ascenseur (40) selon la revendication 1 ou la revendication 2, dans lequel le moyen d'analyse (401) est configuré pour acquérir des informations d'attribut de la personne (P1-P6), et le moyen d'acquisition (401) est configuré pour acquérir les informations concernant des étages de destination d'une personne dont les informations d'attribut sont identiques ou sensiblement identiques aux informations d'attribut acquises par le moyen d'analyse (401).

4.  Appareil de commande d'ascenseur (40) selon l'une quelconque des revendications précédentes, dans lequel, dans un cas dans lequel il n'est pas possible d'acquérir les informations concernant les étages de destination de la personne (P1-P6) identifiée par le moyen d'analyse (401), le moyen d'acquisition (401) est configuré pour acquérir les informations concernant des étages utilisés d'une personne dont les informations d'attribut sont identiques ou sensiblement identiques aux informations d'attribut acquises par le moyen d'analyse (401).

5.  Appareil de commande d'ascenseur (40) selon l'une quelconque des revendications précédentes, dans lequel :

le moyen d'analyse (401) est configuré pour analyser des images d'une pluralité de personnes qui attendent dans une zone environnant une porte d'ascenseur de chaque étage d'une pluralité d'étages du bâtiment ;
le moyen d'acquisition (401) est configuré, sur la base d'un résultat de l'analyse effectuée par le moyen d'analyse (401), pour acquérir des informations concernant des étages de destination du bâtiment qui pourraient correspondre à des destinations des personnes de la pluralité de personnes lors de l'utilisation de l'ascenseur ;
le moyen de prédiction (401) est configuré, sur la base des informations concernant les étages de destination acquises par le moyen d'acquisition (401), pour prédire si les étages de destination correspondent aux destinations des personnes de la pluralité de personnes et pour déterminer si les destinations correspondent à des étages supérieurs ou à des étages inférieurs ; et
le moyen de génération (401) est configuré, sur la base des informations concernant les étages de destination acquises par le moyen d'acquisition (401) et des prédictions du moyen de prédiction (401), pour générer un programme d'exploitation de l'ascenseur.

6.  Appareil de commande d'ascenseur (40) selon la revendication 5, dans lequel :

le moyen de prédiction (401) est configuré pour identifier un étage correspondant à une destination du nombre le plus important de personnes, qui est un étage supérieur ou un étage inférieur ; et
le moyen de génération (401) est configuré pour générer le programme d'exploitation de sorte qu'une cabine d'ascenseur prédéterminée soit envoyée de préférence vers l'étage correspondant à une destination du nombre le plus important de personnes, qui est un étage supérieur ou un étage inférieur.

7.  Appareil de commande d'ascenseur (40) selon l'une quelconque des revendications précédentes, dans lequel :

le moyen de prédiction (401) est configuré pour identifier un étage correspondant à une destination d'un second nombre le plus important de personnes, qui est un étage supérieur ou un étage inférieur ; et
le moyen de génération (401) est configuré pour générer le programme d'exploitation de sorte qu'une autre cabine d'ascenseur prédéterminée soit envoyée de préférence vers l'étage correspondant à une destination du second nombre le plus important de personnes, qui est un étage supérieur ou un étage inférieur.

**8.** Appareil de commande d'ascenseur (40) selon l'une quelconque des revendications précédentes, configuré pour commander une pluralité de cabines d'ascenseur, dans lequel au moins une cabine de la pluralité de cabines d'ascenseur est en outre commandée séparément pour monter successivement d'étages inférieurs vers des étages supérieurs, en s'arrêtant à des étages au niveau desquels une cabine d'ascenseur a fait l'objet d'une demande de montée d'étages et conformément aux instructions d'occupants de cabine d'ascenseur, et pour descendre ensuite successivement d'étages supérieurs vers des étages inférieurs, en s'arrêtant à des étages au niveau desquels une cabine d'ascenseur a fait l'objet d'une demande de descente d'étages et conformément à des occupants de cabine d'ascenseur.

**9.** Appareil de commande d'ascenseur (40) selon l'une quelconque des revendications précédentes, dans lequel le moyen de génération (401) est configuré pour ne générer le programme d'exploitation que dans un cas dans lequel la cabine d'ascenseur est vide, dans lequel l'appareil de commande d'ascenseur (40) est configuré pour commander la cabine d'ascenseur conformément aux instructions d'un ou de plusieurs occupants de cabine d'ascenseur dans un cas dans lequel la cabine d'ascenseur n'est pas vide.

**10.** Système d'ascenseur comprenant un appareil de commande d'ascenseur (40) selon l'une quelconque des revendications précédentes, et une pluralité de cabines d'ascenseur pilotées configurées pour un déplacement entre des ouvertures d'une pluralité d'ouvertures (23) de porte d'ascenseur d'une pluralité d'étages d'un bâtiment, dans lequel le système d'ascenseur est configuré pour piloter les cabines d'ascenseur conformément à un programme généré par l'appareil de commande d'ascenseur (40).

**11.** Procédé de commande d'ascenseur, comprenant :

une étape d'analyse (S1-S6) consistant à analyser une image obtenue par une capture d'une image d'une zone environnant une ouverture (23) de porte d'ascenseur et à reconnaître une personne (P1-P6) dans l'image ;
une étape d'acquisition (S7-S9) consistant, sur la base d'un résultat de l'analyse effectuée à l'étape d'analyse, à acquérir des informations concernant un étage de destination (101-105) d'un bâtiment (100), qui sont associées à la personne reconnue (P1-P6) ;
une étape de prédiction (S10) consistant, sur la base des informations concernant l'étage de destination acquises à l'étape d'acquisition, à prédire si l'étage de destination correspond à une destination de la personne reconnue (P1-P6) et à déterminer si la destination est un étage supérieur ou un étage inférieur ;
**caractérisé par**
une étape de génération (S11) consistant, sur la base des informations concernant l'étage de destination acquises à l'étape d'acquisition et de la prédiction obtenue à l'étape de prédiction, à générer un programme d'exploitation de l'ascenseur de sorte qu'une cabine d'ascenseur soit envoyée de préférence vers un étage dans un sens de destination d'un étage supérieur ou d'un étage inférieur, qui est un étage ayant fait l'objet d'une prédiction de déplacement dans le sens de destination du nombre le plus important de personnes.

**12.** Programme pour un système d'ascenseur qui, lorsqu'il est exécuté sur un appareil de commande d'ascenseur (40), amène le système de commande d'ascenseur à mettre en oeuvre un procédé selon la revendication 11.

**13.** Support d'informations contenant en mémoire un programme selon la revendication 12.

# FIG. 1

FIG. 2

FIG. 3

```
            START
              │
              ▼
┌──────────────────────┐
│    ACQUIRE IMAGE     │~S1
└──────────────────────┘
              │
              ▼          S2
     ╱────────────────╲
 NO ╱   IS HUMAN BODY   ╲
◄───┤    DETECTED?       │
     ╲────────────────╱
              │ YES
              ▼
┌──────────────────────┐
│   COUNT NUMBER OF    │~S3
│    WAITING PEOPLE    │
└──────────────────────┘
              │
              ▼
┌──────────────────────┐
│    ANALYZE IMAGE     │~S4
│   (IDENTIFY PERSON)  │
└──────────────────────┘
              │
              ▼
┌──────────────────────┐
│  RECORD FACE IMAGE   │~S5
│   FEATURE AMOUNT     │
└──────────────────────┘
              │
              ▼
┌──────────────────────┐
│  COLLATE FACE IMAGE  │~S6
│   FEATURE AMOUNTS    │
└──────────────────────┘
              │
              ▼          S7
     ╱────────────────╲
 NO ╱  DOES WAITING     ╲
◄───┤ PERSON HAVE USAGE  │
     ╲   HISTORY?       ╱
     ╲────────────────╱
              │ YES
              ▼
┌──────────────────────┐
│   ACQUIRE USAGE      │~S8
│     HISTORY          │
└──────────────────────┘
              │
              ▼
┌──────────────────────┐
│ PREDICT POSSIBILITY  │~S9
│   OF EXITING CAR     │
└──────────────────────┘
              │
              ▼
┌──────────────────────┐
│  PREDICT DESTINATION │~S10
└──────────────────────┘
              │
              ▼
┌──────────────────────┐
│ GENERATE OPERATION   │~S11
│   SCHEDULE AND       │
│  PERFORM CONTROL     │
└──────────────────────┘
```

```
              │
              ▼
┌──────────────────────┐
│  STOP ELEVATOR CAR   │~S12
└──────────────────────┘
              │
              ▼
┌──────────────────────┐
│    ANALYZE IMAGE     │~S13
│   (IDENTIFY PERSON)  │
└──────────────────────┘
              │
              ▼
┌──────────────────────┐
│  IDENTIFY BOARDING   │~S14
│      PERSON          │
└──────────────────────┘
              │
              ▼
┌──────────────────────┐
│  RECORD BOARDING     │~S15
│     HISTORY          │
└──────────────────────┘
              │
              ▼
┌──────────────────────┐
│ GENERATE OPERATION   │~S16
│   SCHEDULE AND       │
│  PERFORM CONTROL     │
└──────────────────────┘
              │
              ▼
┌──────────────────────┐
│ GIVE NOTIFICATION OF │~S17
│ FLOOR WHERE ELEVATOR │
│   CAR IS TO STOP     │
└──────────────────────┘
              │
              ▼
┌──────────────────────┐
│    ANALYZE IMAGE     │~S18
│   (IDENTIFY PERSON)  │
└──────────────────────┘
              │
              ▼
┌──────────────────────┐
│  STOP ELEVATOR CAR   │~S19
└──────────────────────┘
              │
              ▼
┌──────────────────────┐
│    ANALYZE IMAGE     │~S20
│   (IDENTIFY PERSON)  │
└──────────────────────┘
              │
              ▼
┌──────────────────────┐
│  IDENTIFY EXITING    │~S21
│      PERSON          │
└──────────────────────┘
              │
              ▼
┌──────────────────────┐
│  RECORD EXITING      │~S22
│     HISTORY          │
└──────────────────────┘
              │
              ▼
            END
```

24

FIG. 4

# FIG. 5

# FIG. 6

FIG. 7

```
        ┌─────────┐
        │  START  │
        └────┬────┘
             │
  ┌──────────▼──────────┐
  │   ACQUIRE IMAGE     │─── S1
  └──────────┬──────────┘
             │               S2
   NO ◄──────┤ IS HUMAN BODY
             │  DETECTED?
           YES│
  ┌──────────▼──────────┐
  │  COUNT NUMBER OF    │─── S3
  │  WAITING PEOPLE     │
  └──────────┬──────────┘
  ┌──────────▼──────────┐
  │  ANALYZE IMAGE      │─── S4
  │  (IDENTIFY PERSON)  │
  └──────────┬──────────┘
  ┌──────────▼──────────┐
  │  RECORD FACE IMAGE  │─── S5
  │  FEATURE AMOUNT     │
  └──────────┬──────────┘
  ┌──────────▼──────────┐
  │  COLLATE FACE IMAGE │─── S6
  │  FEATURE AMOUNTS    │
  └──────────┬──────────┘
             │               S7
   NO ◄──────┤ DOES WAITING
             │ PERSON HAVE USAGE
             │  HISTORY?
           YES│
  ┌──────────▼──────────┐
  │  ACQUIRE USAGE      │─── S8
  │  HISTORY            │
  └──────────┬──────────┘
  ┌──────────▼──────────┐
  │ PREDICT POSSIBILITY │─── S9
  │  OF EXITING CAR     │
  └──────────┬──────────┘
  ┌──────────▼──────────┐
  │ PREDICT DESTINATION │─── S10
  └──────────┬──────────┘
  ┌──────────▼──────────┐
  │ GENERATE OPERATION  │─── S11
  │  SCHEDULE AND       │
  │  PERFORM CONTROL    │
  └─────────────────────┘
```

```
  ┌─────────────────────┐
  │  STOP ELEVATOR CAR  │─── S12
  └──────────┬──────────┘
  ┌──────────▼──────────┐
  │  ANALYZE IMAGE      │─── S31
  │  (IDENTIFY PERSON)  │
  └──────────┬──────────┘
  ┌──────────▼──────────┐
  │  IDENTIFY BOARDING  │─── S32
  │  PERSON             │
  └──────────┬──────────┘
  ┌──────────▼──────────┐
  │  RECORD BOARDING    │─── S15
  │  HISTORY            │
  └──────────┬──────────┘
  ┌──────────▼──────────┐
  │ GENERATE OPERATION  │─── S16
  │  SCHEDULE AND       │
  │  PERFORM CONTROL    │
  └──────────┬──────────┘
  ┌──────────▼──────────┐
  │ GIVE NOTIFICATION OF│─── S17
  │ FLOOR WHERE ELEVATOR│
  │ CAR IS TO STOP      │
  └──────────┬──────────┘
  ┌──────────▼──────────┐
  │  STOP ELEVATOR CAR  │─── S19
  └──────────┬──────────┘
  ┌──────────▼──────────┐
  │  ANALYZE IMAGE      │─── S20
  │  (IDENTIFY PERSON)  │
  └──────────┬──────────┘
  ┌──────────▼──────────┐
  │  IDENTIFY EXITING   │─── S33
  │  PERSON             │
  └──────────┬──────────┘
  ┌──────────▼──────────┐
  │  RECORD EXITING     │─── S22
  │  HISTORY            │
  └──────────┬──────────┘
        ┌────▼────┐
        │   END   │
        └─────────┘
```

28

FIG. 8 ( START )

ACQUIRE IMAGE ~ S1

S2
IS HUMAN BODY DETECTED? — NO

YES

COUNT NUMBER OF WAITING PEOPLE ~ S3

ANALYZE IMAGE (IDENTIFY PERSON) ~ S4

RECORD FACE IMAGE FEATURE AMOUNT ~ S5

COLLATE FACE IMAGE FEATURE AMOUNTS ~ S6

S7
DOES WAITING PERSON HAVE USAGE HISTORY? — NO

YES

ACQUIRE USAGE HISTORY ~ S8

PREDICT POSSIBILITY OF EXITING CAR ~ S9

PREDICT DESTINATION ~ S10

GENERATE OPERATION SCHEDULE AND PERFORM CONTROL ~ S11

STOP ELEVATOR CAR ~ S12

ANALYZE IMAGE (IDENTIFY PERSON) ~ S13

ANALYZE ATTRIBUTE INFORMATION ~ S41

COLLATE ATTRIBUTE VALUES ~ S42

PREDICT POSSIBILITY OF EXITING CAR ~ S43

IDENTIFY BOARDING PERSON ~ S14

RECORD BOARDING HISTORY ~ S15

GENERATE OPERATION SCHEDULE AND PERFORM CONTROL ~ S16

GIVE NOTIFICATION OF FLOOR WHERE ELEVATOR CARIS TO STOP ~ S17

ANALYZE IMAGE (IDENTIFY PERSON) ~ S18

STOP ELEVATOR CAR ~ S19

ANALYZE IMAGE (IDENTIFY PERSON) ~ S20

IDENTIFY EXITING PERSON ~ S21

RECORD EXITING HISTORY ~ S22

( END )

29

# FIG. 9

```
                    ┌─────────┐
                    │  START  │
                    └─────────┘
                         │
          ┌──────────────┤
          │              ▼                    S81
          │         ╱─────────────╲
          │        ╱  ARE WAITING  ╲    NO
          │        ╲ PEOPLE PRESENT? ╱──────────┐
          │         ╲───────────────╱           │
          │              │ YES                  │
          │              ▼                      │
          │   ┌────────────────────────┐        │
          │   │  PREDICT FLOOR WHERE    │        │
          │   │  LARGEST NUMBER OF      │        │
          │   │  WAITING PEOPLE ON      │~S82    │
          │   │  DIRECTION-BY-DIRECTION │        │
          │   │  BASIS ARE PRESENT      │        │
          │   └────────────────────────┘        │
          │              │                      │
          │              ▼                      │
          │   ┌────────────────────────┐        │
          │   │  SEND FIRST ELEVATOR    │        │
          │   │  CAR TO FLOOR WHERE     │        │
          │   │  LARGEST NUMBER OF      │        │
          │   │  WAITING PEOPLE ON      │~S83    │
          │   │  DIRECTION-BY-DIRECTION │        │
          │   │  BASIS ARE PRESENT      │        │
          │   └────────────────────────┘        │
          │              │                      │
          │              ▼                      │
          │   ┌────────────────────────┐        │
          │   │  DELETE FLOOR WHERE     │        │
          │   │  LARGEST NUMBER OF      │        │
          │   │  WAITING PEOPLE ON      │        │
          │   │  DIRECTION-BY-DIRECTION │~S84    │
          │   │  BASIS ARE PRESENT FROM │        │
          │   │  DESTINATION FLOORS OF  │        │
          │   │  SECOND ELEVATOR CAR    │        │
          │   └────────────────────────┘        │
          │              │         ┌────────────┤
          │              ▼         ▼            │
          │   ┌────────────────────────┐        │
          │   │  OPERATE ELEVATOR CARS │~S85     │
          │   └────────────────────────┘        │
          │              │                      │
          │              ▼              S86      │
          │         ╱─────────────╲              │
          │   YES  ╱  IS FIRST      ╲   NO       │
          └───────╱   ELEVATOR       ╲───────────┘
                  ╲  CAR EMPTY?     ╱
                   ╲───────────────╱
                         │
                         ▼
                    ┌─────────┐
                    │   END   │
                    └─────────┘
```

**EP 3 424 856 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012239085 A
- EP 3075695 A
- WO 2015034459 A